# EUROPEAN PATENT APPLICATION

(11) **EP 4 692 133 A1**
(43) Date of publication of application: **11.02.2026**
(21) Application number: 24780937.9
(22) Date of filing: 01.04.2024
(51) Int. Cl.: C08F 4/651, C08F 4/654, C08F 10/00

(54) **SOLID TITANIUM CATALYST COMPONENT, CATALYST FOR POLYMERIZING OLEFIN, AND METHOD FOR POLYMERIZING OLEFIN**

(30) Priority: 30.03.2023 JP 2023055869
(71) Applicant: Mitsui Chemicals, Inc., Tokyo 104-0028 (JP)
(72) Inventor: KIMURA Takashi, Kuga-gun, Yamaguchi 740-0061 (JP); ISOGAI Makoto, Sodegaura-shi, Chiba 299-0265 (JP); TAKANO Shotaro, Sodegaura-shi, Chiba 299-0265 (JP); YANO Takaaki, Sodegaura-shi, Chiba 299-0265 (JP); TAKEUCHI Takumi, Sodegaura-shi, Chiba 299-0265 (JP)
(74) Representative: J A Kemp LLP
(86) International application number: PCT/JP2024/013472
(87) International publication number: WO 2024/204845

(57) **Abstract**

A solid titanium catalyst component, including magnesium, titanium, halogen, and an amide compound specified by the following formula (1). A catalyst for olefin polymerization, including the solid titanium catalyst component (I) and an organometallic compound catalyst component (II) containing a metal element selected from Groups 1, 2, and 13 of the periodic table. An olefin polymerization method, including polymerizing an olefin in the presence of the catalyst for olefin polymerization.

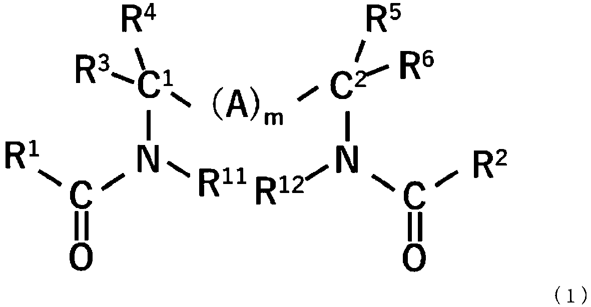

## Description

### Technical Field

The present invention relates to a solid titanium catalyst component, a catalyst for olefin polymerization containing the solid titanium catalyst component, and a method for polymerizing an olefin using the catalyst for olefin polymerization.

### Background Art

To date, known catalysts that are used to produce an olefin polymer such as an ethylene homopolymer, an α-olefin homopolymer or an ethylene/α-olefin copolymer include catalysts containing a titanium compound supported on an activated magnesium halide. Hereinafter, "homopolymerization" and "copolymerization" may be collectively referred to as "polymerization".

For example, catalysts containing titanium tetrachloride or titanium trichloride called Ziegler-Natta catalysts, and catalysts containing an organometallic compound and a solid titanium catalyst component composed of magnesium, titanium, halogen, and an electron donor are widely known as such catalysts for olefin polymerization.

The latter catalysts show high activity in the polymerization of α-olefins such as ethylene, propylene, and 1-butene. The resulting α-olefin polymers may have high stereoregularity.

It is reported that excellent polymerization activity and stereospecificity are demonstrated when, among the above catalysts, a catalyst composed of a solid titanium catalyst component carrying an electron donor selected from carboxylic acid esters typically represented by phthalic acid esters, an aluminum-alkyl compound as a cocatalyst component, and a silicon compound having at least one Si-OR (wherein R is a hydrocarbon group) is used in particular (e.g., Patent Literature 1). In addition to phthalic acid esters, a large number of electron donors such as polyether compounds are being researched.

Concerning the research involving an ester compound as an electron donor, a catalyst containing a carboxylic acid ester having two or more ester groups (e.g., Patent Literature 2) is also disclosed. The present applicant also reported that an ester compound having a specific cyclic structure provides, in a highly active manner, a polyolefin having a broad molecular weight distribution (Patent Literature 3).

A catalyst having a substituted succinic acid ester as an electron donor is reported as a catalyst that provides a polyolefin having a broad molecular weight distribution. The present applicant also reported catalysts containing a polycarboxylic acid ester having a specific cyclic structure (Patent Literatures 4 to 6).

### Citation List

### Patent Literature

Patent Literature 1: JP57-63310A
Patent Literature 2: JP2005-517746A
Patent Literature 3: WO2008/010459
Patent Literature 4: WO2006/077945
Patent Literature 5: WO2022/045232
Patent Literature 6: WO2022/138634

### Summary of Invention

### Technical Problem

Polypropylene (a propylene polymer) representing a polymer of an olefin having 3 or more carbon atoms is known to have a potential to show heat resistance and rigidity comparable to general-purpose engineering plastics while having a hydrocarbon structure. Polyolefin, which is a hydrocarbon structure, is a material entailing relatively low environmental burdens by barely generating toxic gas during combustive disposal or thermal recycle (a recycling method for recovering the thermal energy of combustion as, e.g., electric power).

It is well known that the heat resistance of propylene polymer depends on its stereoregularity, but it also seems to depend on the relationship between the stereoregularity and molecular weight and their distribution. It is also known that rigidity is affected by molecular weight distribution as well as stereoregularity. While techniques have been developed that control stereoregularity to a considerable degree, it is expected with recent advancement of molding technology that polymers having higher stereoregularity may exhibit unexpected physical properties. Simultaneously having a broader molecular weight distribution may further improve the physical-property balance as well. Also, from the viewpoint of heat resistance and heat resistant rigidity, a high melting point and a high amount of heat of fusion of the polymers is preferable.

Accordingly, an object of the present invention is to provide a solid titanium catalyst component, a catalyst for olefin polymerization, and a method for polymerizing an olefin that enable an olefin polymer having a broad molecular weight distribution, and a high melting point and a high amount of heat of fusion to be produced.

### Solution to Problem

As a result of diligent research, the present inventors have found that a solid titanium catalyst component containing a polyvalent amide compound having a specific structure enables an olefin polymer having a broad molecular weight distribution, and a high melting point and a high amount of heat of fusion to be produced in a highly active manner, and have completed the present invention. Examples of the present invention are shown below.

[1] A solid titanium catalyst component, including magnesium, titanium, halogen, and an amide compound specified by the following formula (1). 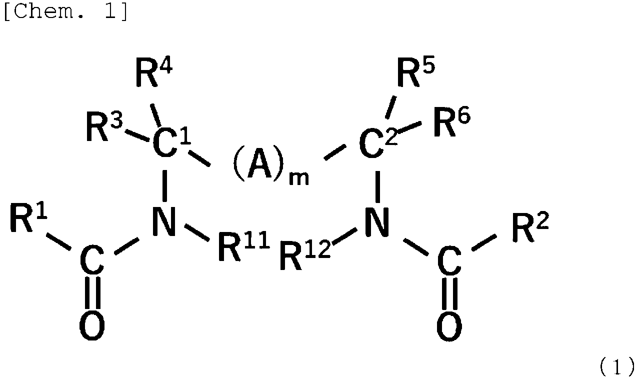 [In the formula (1),
   C, C¹, and C² are carbon atoms,
   N is a nitrogen atom,
   R¹ and R² are each a hydrocarbon group,
   R³ to R⁶ are each a group containing an element selected from carbon, hydrogen, and elements in Groups 15, 16, and 17 of the periodic table,
   R¹¹ and R¹² are each a hydrogen atom or a hydrocarbon group,
   m is an integer of 0 to 10, and
   A is a linking group selected from an aliphatic group, an alicyclic group, and an aromatic group, and a plurality of A, when present, are all groups with the same structure, or are groups with structures that partially or wholly differ from each other.]
[2] The solid titanium catalyst component according to item [1], wherein the amide compound is specified by the following formula (2). 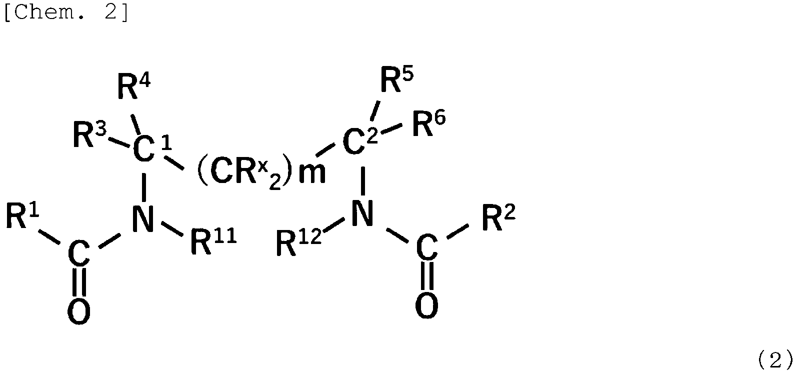 [In the formula (2), R¹ to R⁶, R¹¹, R¹², C, C¹, C², and N are as defined for the formula (1), m is an integer of 1 to 10, a plurality of R^{x} are groups containing an element selected from carbon, hydrogen, and elements in Groups 15, 16, and 17 of the periodic table, and R^{x} are optionally bonded to each other to form a ring structure.]
[3] The solid titanium catalyst component according to item [1] or [2], wherein R¹¹ and R¹² are hydrogen atoms.
[4] The solid titanium catalyst component according to any of items [1] to [3], wherein R³, R⁴, R⁵, and R⁶ are hydrogen atoms.
[5] A catalyst for olefin polymerization, including the solid titanium catalyst component (I) according to any of items [1] to [4] and an organometallic compound catalyst component (II) containing a metal element selected from Groups 1, 2, and 13 of the periodic table.
[6] The catalyst for olefin polymerization according to item [5], further including an electron donor (III).
[7] An olefin polymerization method, including polymerizing an olefin in the presence of the catalyst for olefin polymerization according to item [5] or [6].

### Advantageous Effects of Invention

According to the solid titanium catalyst component, catalyst for olefin polymerization, and olefin polymerization method of the present invention, an olefin polymer having a broad molecular weight distribution, and a high melting point and a high amount of heat of fusion can be produced.

Therefore, it can be expected that the use of the solid titanium catalyst component, catalyst for olefin polymerization, and method for polymerizing an olefin of the present invention enables an olefin polymer having, for example, not only moldability and rigidity but also high heat resistance to be produced.

### Description of Embodiments

Hereinafter, the solid titanium catalyst component (I), catalyst for olefin polymerization, method for producing an olefin polymer, and propylene polymer according to the present invention will now be described in detail.

### [Solid titanium catalyst component (I)]

The solid titanium catalyst component (I) according to the present invention contains titanium, magnesium, halogen, and an amide compound having a specific structure (hereinafter sometimes simply referred to as an "amide compound").

### <Amide compound>

The amide compound is represented by the following formula (1).

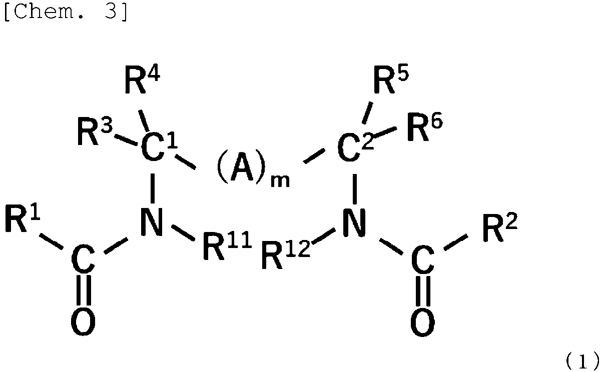

In the above formula (1),
C, C¹, and C² are carbon atoms, and N is a nitrogen atom. Also, lines such as "-" represent covalent bonds.

R¹ and R² are hydrocarbon groups. More specifically, R¹ and R² are each a substituted or unsubstituted hydrocarbon group having 1 to 20 carbon atoms, preferably a substituted or unsubstituted hydrocarbon having an aryl group and 6 to 20 carbon atoms, and may be a structure containing a heteroatom, which will be described later. Examples of the heteroatom-containing aryl group include those with a basic skeleton having a structure in which the aryl structure itself contains a heteroatom, such as a pyrrole ring or a pyran ring, and those in which a substituent such as a heteroatom-containing hydrocarbon group, e.g., an alkoxy group, is bonded to a benzene ring.

A representative example of the heteroatom-containing structure is a structure having a heteroatom-containing substituent, a preferable example of such a substituent is a heteroatom-containing aryl group, and a particularly preferable example is an oxygen-containing aryl group.

Note that R¹ and R² of the present invention preferably have a structure in which one carbon atom therein is covalently bonded to the adjacent carbonyl carbon.

R¹, R², R³, R⁴, R⁵, R⁶, R¹¹, R¹², and A described above can be bonded to each other to form a ring structure. Their preferable aspects will be described later.

R¹ and R² can be bonded to each other to form a ring structure. Also, substituents selected from R¹, R¹¹ described later, R³, and R⁴ can be bonded to each other to form a ring structure. In addition, substituents selected from R², R¹² described later, R⁵, and R⁶ can be bonded to each other to form a ring structure.

A substituent selected from the substituents of R³ and R⁴ and a substituent selected from the substituents of R⁵ and R⁶ can also be bonded to each other to form a ring structure. In this case, m described later is preferably 1 or more.

The ring structure formed by these substituents and the linking group A described later is preferably a 5 or more-membered alicyclic structure, and more preferably a 6 or more-membered ring, considering the mobility around the C¹ carbon and C² carbon in the formula (1), as described later. On the other hand, the upper limit of the number of members in the ring structure is arbitrary, but is preferably a 10-membered ring, and more preferably an 8-membered ring. Note that it may be preferable for at least one among the structures containing the C¹ carbon and C² carbon to be other than a cyclic structure.

R³ to R⁶ are groups containing an element selected from carbon, hydrogen, and elements in Groups 15, 16, and 17 of the periodic table. More specifically, R³ to R⁶ are each a group selected from a hydrogen atom, a substituted or unsubstituted hydrocarbon group having 1 to 20 carbon atoms, and a halogen atom.

A hydrogen atom, a carbon atom, or both in R³ to R⁶ may be partially substituted with an atom selected from the group consisting of Groups 15 to 17 elements of the periodic table, such as a nitrogen atom, an oxygen atom, a phosphorus atom, and a halogen atom. That is to say, aspects of R³ to R⁶ include hydrocarbon groups containing an atom selected from the group consisting of Groups 15 to 17 elements of the periodic table, such as nitrogen, oxygen, phosphorus, and halogen. The atom described above may be substituted at one or multiple positions.

In the present invention, the term "atom" as in, for example, a halogen atom or a hydrogen atom in the description of a substituent may refer to, as a matter of course, aspects with a bond such as "H-" or "Cl-" when expressed in a structural formula.

Also, when R³ and R⁴ or R⁵ and R⁶ form a ring structure, it includes aspects in which a carbon-carbon double bond is formed (in this case, the carbon-carbon double bond is considered to be a 2-membered ring). On the other hand, R³ to R⁶ may be bonded to the linking group A described later to form a ring structure, but in this case, aspects of forming a double bond are excluded from the scope of the present invention. The reason why such a structure is suitable for the present invention will be described later.

R³ to R⁶ are preferably relatively low-bulk substituents, and particularly preferably hydrogen atoms. In solid titanium catalyst components containing organic compounds (sometimes generally referred to as internal donors), there tends to be many examples where bulky compounds are suitable. Although the reason why such low-bulk substituents tend to be suitable in the present invention is not known at present, it is thought to be probably because, as described later, the amide compound of the present invention tends to stably take conformation relatively suitable as a component of catalyst for olefin polymerization, for example, and therefore, when the substituents R³ to R⁶ on the opposite side of the amide groups have less bulky structures, the coordination of olefin to titanium of the solid titanium catalyst component is less likely to be disordered.

R¹¹ and R¹² are hydrogen atoms or hydrocarbon groups. These hydrocarbon groups are the same as the aspects described for R¹ and R².

R¹¹ and R¹² are sometimes preferably hydrogen atoms. It is known that the structure in which R¹¹ and R¹² are hydrogen, that is, the structure represented by "-N-H", is usually considered to have active hydrogen and may usually function as a catalytic poison as an internal donor component included in solid titanium catalyst components. Although the reason why even such a "-N-H" structure demonstrates a suitable effect in the present invention is not known at present, the present inventors speculate as follows.

The two "-N-H" structures as described above are located relatively close to each other, and therefore are expected to have relatively strong interaction, such as hydrogen bond. The "-N-H" structure can also be expected to have relatively strong interaction with the carbonyl group of the other amide group for the same reason. Therefore, it is thought that the action as a catalytic poison may be reduced. It is also thought that the interaction described above has the effect of suppressing rotation of the amide groups and facilitating taking "somewhat stable" conformation with relatively little change, such as pseudo ring structure, for example, conformation in which relatively large twist-like motions occur, and therefore, moderate interaction with titanium may be formed in the solid titanium catalyst component and active sites with high stereoregularity may be easily formed.

Based on the same idea as described above, a structure in which R¹¹ and R¹² are bonded to each other to form a ring structure is also expected to be a preferable aspect of the present invention. Of course, hydrocarbon groups may be preferable for R¹¹ and R¹², including an aspect in which they form a ring structure as described above.

From such a viewpoint, the nitrogen atoms of at least two amide groups possessed by the amide compound of the present invention are preferably bonded via 2 to 10 atoms including carbon (corresponding to a part of -C¹-Aₘ-C²-). More preferably, they are bonded via 2 to 8 atoms, and even more preferably 3 to 6 atoms. In this manner, it may be preferable for the two amide groups to be in a positional relationship that is neither too close nor too far away.

A in the amide compound of the present invention is a linking group selected from an aliphatic group, an alicyclic group, and an aromatic group, and when there is a plurality of A, the plurality of A can all be groups with the same structure, or can be groups with structures that partially or wholly differ from each other. The linking group described above can also be read as a divalent substituent.

The linking group as described above is preferably a substituent with an aliphatic structure, an alicyclic structure, or an aromatic structure. Also, among the above, a substituent selected from an alicyclic structure and an aromatic structure is preferable, and a substituent with an alicyclic structure is even more preferable. Such a substituent is preferably, for example, a substituted or unsubstituted hydrocarbon group having 1 to 20 carbon atoms. Examples of the hydrocarbon group having a substituent described above may include substituents having the heteroatom-containing substituent described above.

As the amide compound of the present invention, compounds with a structure specified by the formula (2) as described below are more definite.

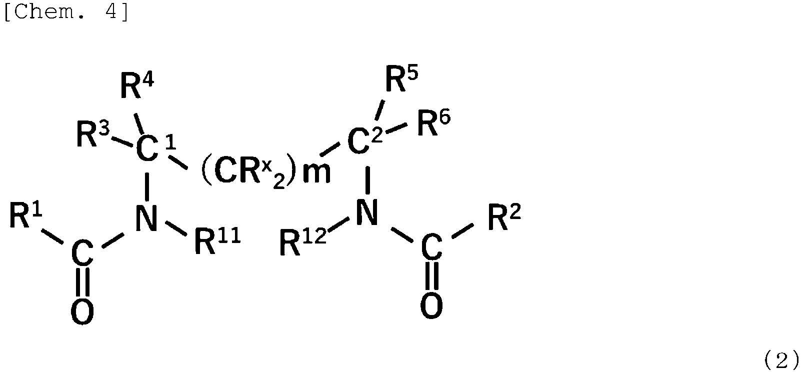

In the above, R¹ to R⁶, R¹¹, R¹², C, C¹, C², N, and m are common to the formula (1).

Examples of R^{x} above may include the same substituents as for R³ to R⁶.

When m is an integer of 1 to 10, it is sometimes preferable for a plurality of R^{x} to be bonded to each other to form a ring structure such as an alicyclic structure or an aromatic structure. Such a ring structure is even more preferably an alicyclic structure.

Also, to the extent that the purpose of the present invention is not impaired, the (CR^{x}₂) chain structure described above may have a structure in which a heteroatom, such as an oxygen or nitrogen-containing group, is included between carbon atoms.

One of the features of the amide compound of the present invention is that it has a structure in which the linking group A and nitrogen of the amide group are bonded via one carbon atom (C¹ and C²). Since such a structure is considered to have relatively low rigidity, it is speculated that the relatively fluctuating (for example, twisting) conformation as described above is easily taken with titanium in the solid titanium catalyst component, thereby demonstrating suitable effects as described above.

m in the amide compound of the present invention is an integer of 0 to 10. The lower limit value is preferably 1, and even more preferably 2, depending on the structure of A. On the other hand, the upper limit value is preferably 8, more preferably 7, and even more preferably 6. Within such a range, the distance between the at least two amide groups is expected to be within an appropriate range, demonstrating suitable olefin polymerization performance of the present invention. When m is 0, C¹ and C² are linked by a single bond.

The hydrocarbon group that is a specific example of R¹ to R¹² is a monovalent hydrocarbon group having 1 to 20 carbon atoms, preferably 1 to 10 carbon atoms, more preferably 2 to 8 carbon atoms, even more preferably 3 to 8 carbon atoms, yet more preferably 4 to 8 carbon atoms, and particularly preferably 4 to 6 carbon atoms. Examples of such a hydrocarbon group include aliphatic hydrocarbon groups, alicyclic hydrocarbon groups, and aromatic hydrocarbon groups, such as a methyl group, an ethyl group, a n-propyl group, an isopropyl group, a n-butyl group, an isobutyl group, a hexyl group, a heptyl group, an octyl group, a 2-ethylhexyl group, a decyl group, a dodecyl group, a tetradecyl group, a hexadecyl group, an octadecyl group, an eicosyl group, a cyclohexyl group, a substituted or unsubstituted aryl group such as a phenyl group, and a substituted or unsubstituted cycloalkenyl group. The alicyclic hydrocarbon groups and the aromatic hydrocarbon groups may contain a substituent. Among such substituents, preferable are, for example, a n-butyl group, an isobutyl group, a hexyl group, an octyl group, and a phenyl group, and more preferable are a n-butyl group, an isobutyl group, and a phenyl group.

Also, in the case of hydrocarbon groups containing Groups 15 to 17 elements of the periodic table, such as nitrogen, oxygen, phosphorus, and halogen, specifically, preferable examples thereof may include a carbonyl structure-containing group such as a carboxylic acid ester group, an aldehyde group, an acetyl group, or an oxycarbonylalkyl group, an alkoxy group, a substituted or unsubstituted alkoxy group, a substituted or unsubstituted alkenyloxy group, a substituted or unsubstituted cycloalkyloxy group, a substituted or unsubstituted cycloalkenyloxy group, a substituted or unsubstituted aryloxy group, a substituted or unsubstituted heteroaryl group, a substituted or unsubstituted heteroaryloxy group, and a siloxy group. The heteroatom is preferably nitrogen and oxygen, and more preferably oxygen.

The heteroatom-containing substituent is preferably an aryl group containing an oxygen-containing substituent, and a preferable example is, specifically, a structure in which an oxygen-containing substituent such as an alkoxy group, an aryloxy group, an alkoxyalkyl group, an aryloxyalkyl group, and a substituent in which oxygen of the above substituent is replaced with a carbonyl group or a carboxyl group, is bonded to an aromatic skeleton. Among such substituents, a substituent in which an alkoxy group or an aryloxy group is bonded to an aromatic skeleton is preferable, and a substituent in which an alkoxy group is bonded to an aromatic skeleton is more preferable. The number of carbon atoms in the oxygen-containing substituent is preferably 1 to 10, more preferably 1 to 8, and even more preferably 1 to 6. More specifically, preferable examples in addition to the methoxyphenyl group include an ethoxyphenyl group, a propyloxyphenyl group, an isopropyloxyphenyl group, a butoxyphenyl group, and a phenoxyphenyl group. An aryl group containing such an oxygen-containing substituent may be used particularly preferably for R¹ and R².

Among such substituents, examples of R³ to R⁶, R¹¹, and R¹² may include a hydrogen atom, a hydrocarbon group such as a substituted or unsubstituted alkyl group, a substituted or unsubstituted alkenyl group, a substituted or unsubstituted cycloalkyl group, a substituted or unsubstituted cycloalkenyl group, a substituted or unsubstituted alkoxy group, a substituted or unsubstituted alkenyloxy group, and a substituted or unsubstituted aryl group; and a heteroatom-containing hydrocarbon group such as a substituted or unsubstituted cycloalkyloxy group, a substituted or unsubstituted cycloalkenyloxy group, a substituted or unsubstituted aryloxy group, a substituted or unsubstituted heteroaryl group, and a substituted or unsubstituted heteroaryloxy group. Among these, hydrogen atoms are preferable, as mentioned above. As the hydrocarbon group, substituents having 1 to 8, even 1 to 7, and especially 1 to 6 carbon atoms are preferable. In addition, among the above, alkyl groups free from heteroatoms are preferable.

Specific examples of the linking group A of the present invention may include divalent substituents corresponding to the structure of the monovalent substituents described above.

Among them, preferable examples thereof may include a methylene group, an ethylene group, a 1,3-propylene group, a 1,2-propylene group, a 1,4-butylene group, a 1,3-butylene group, a 2,3-butylene group, a 2,4-pentylene group, a 1,2-cyclopentylene group, a 1,3-cyclopentylene group, a 1,2-cyclohexylene group, a 1,3-cyclohexylene group, a 1,4-cyclohexylene group, a 1,2-cycloheptalene group, a 1,3-cycloheptalene group, a 1,4-cycloheptalene group, a 1,2-phenylene group, and a 1,3-phenylene group.

Examples of such amide compounds may include the following structures. Some structural formulae of the exemplary compounds below have stereoisomers, and while some isomeric structures are depicted, there may be other isomeric structures that are not exemplified.

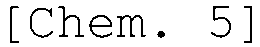

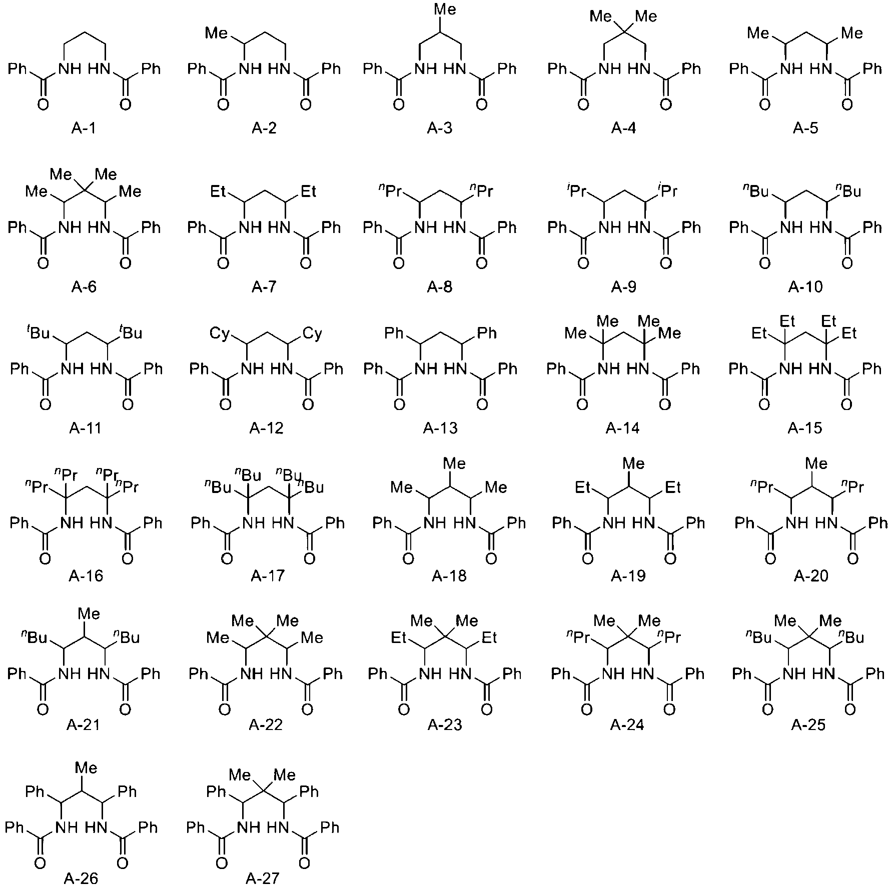

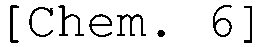

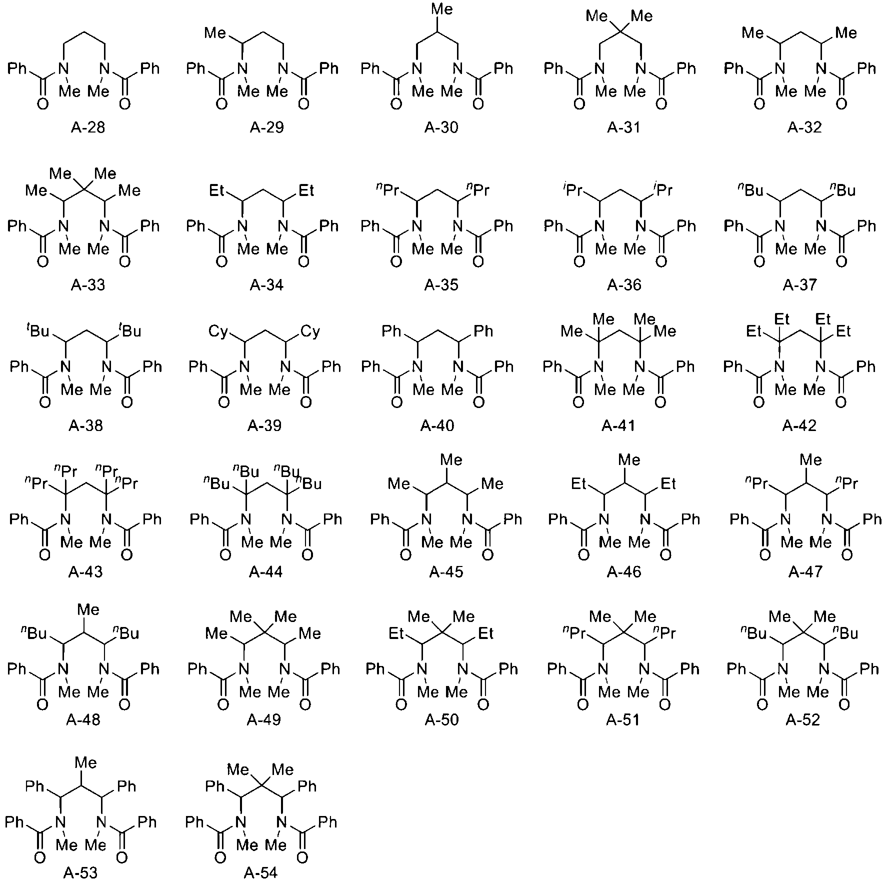

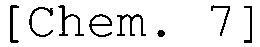

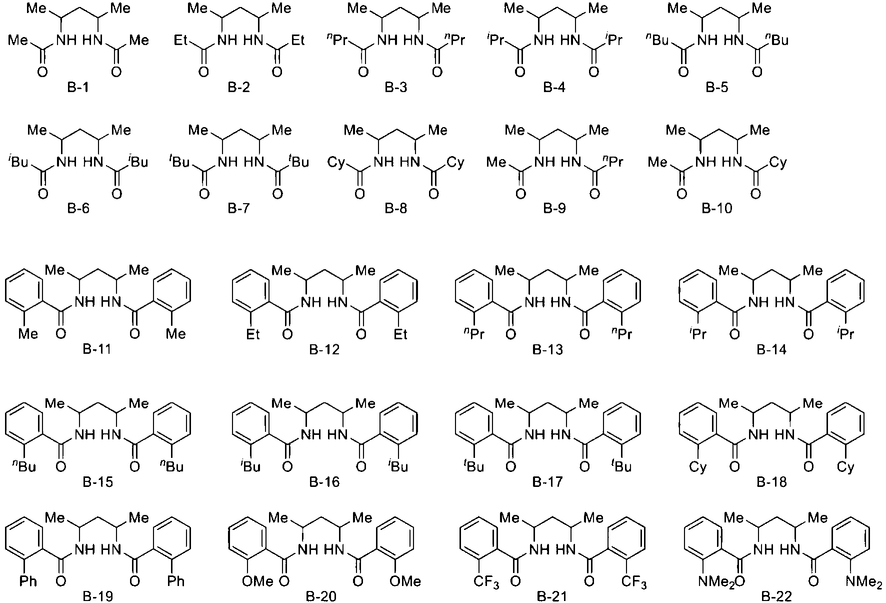

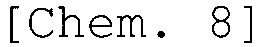

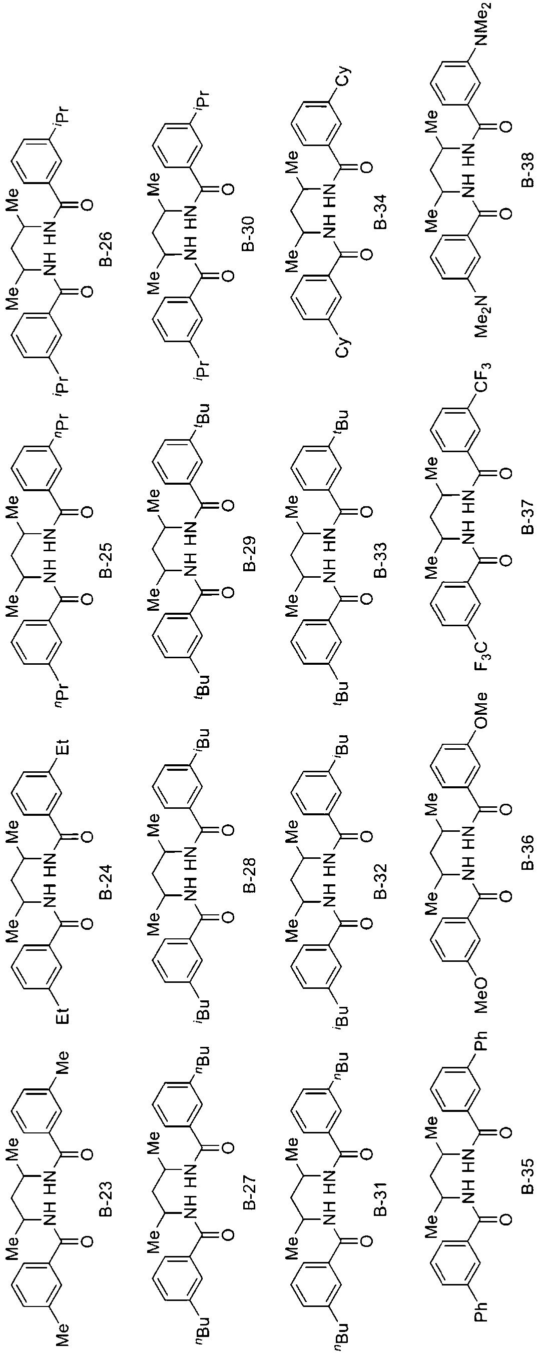

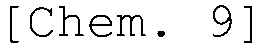

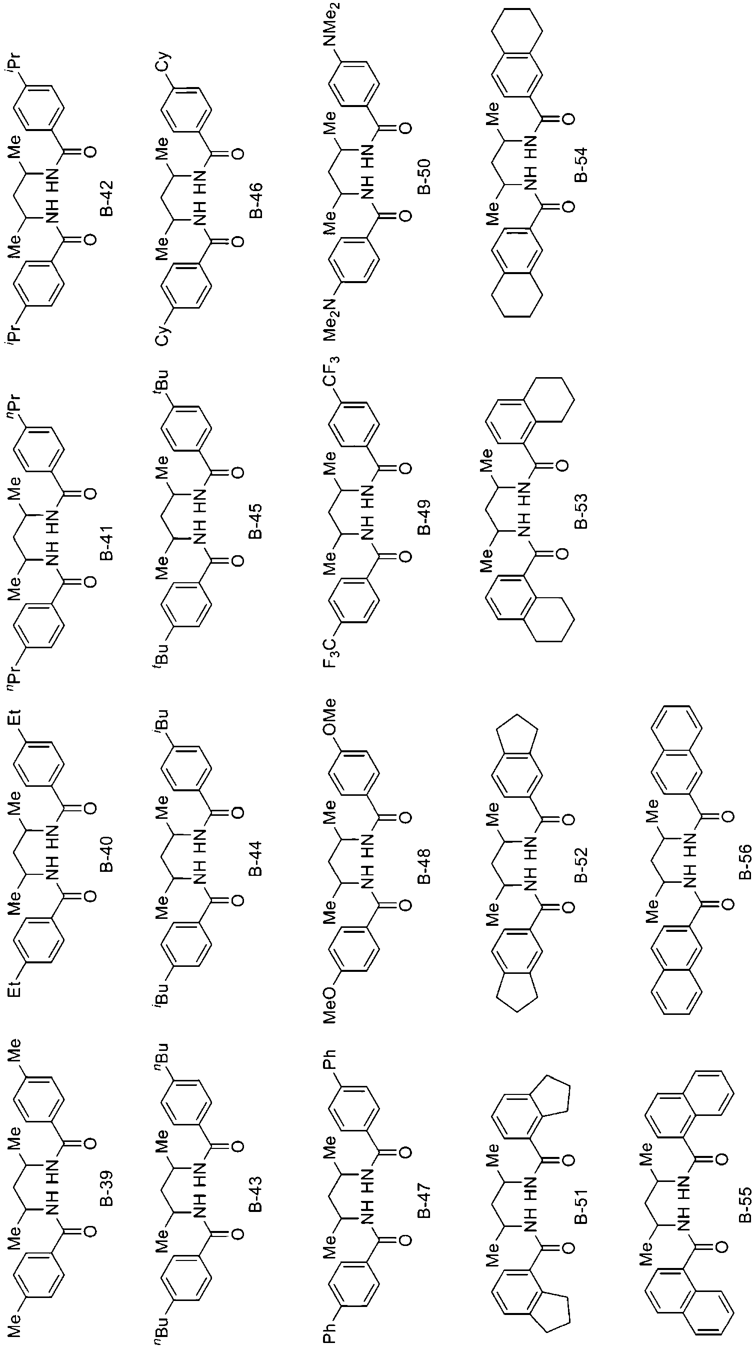

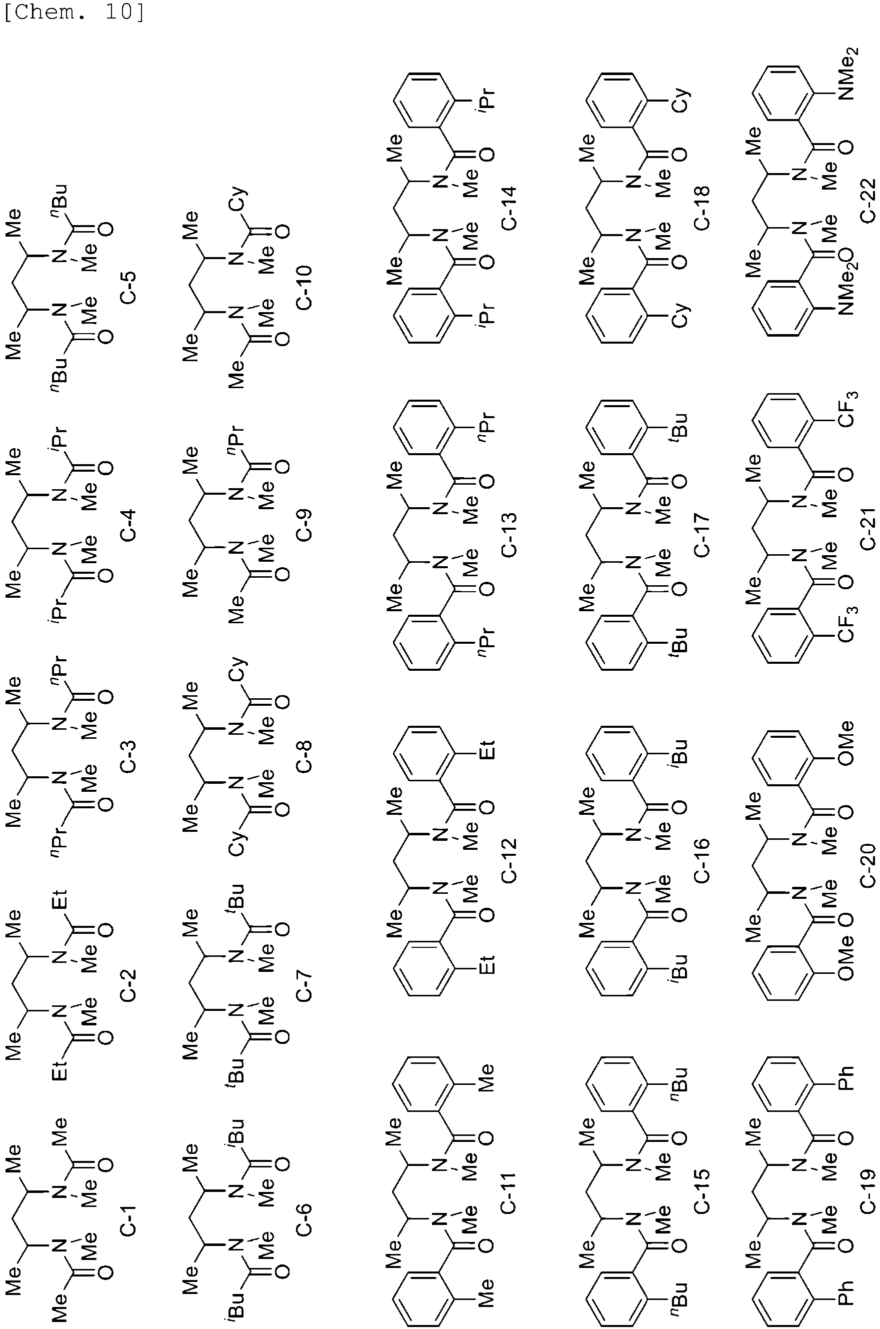

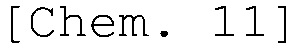

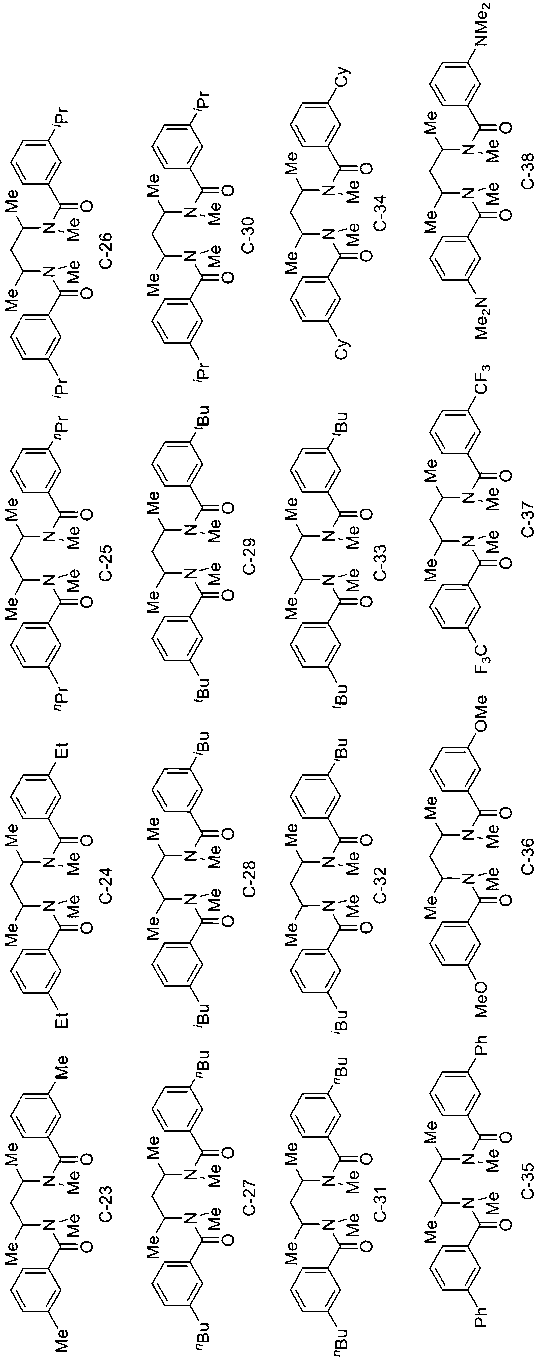

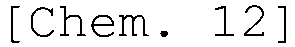

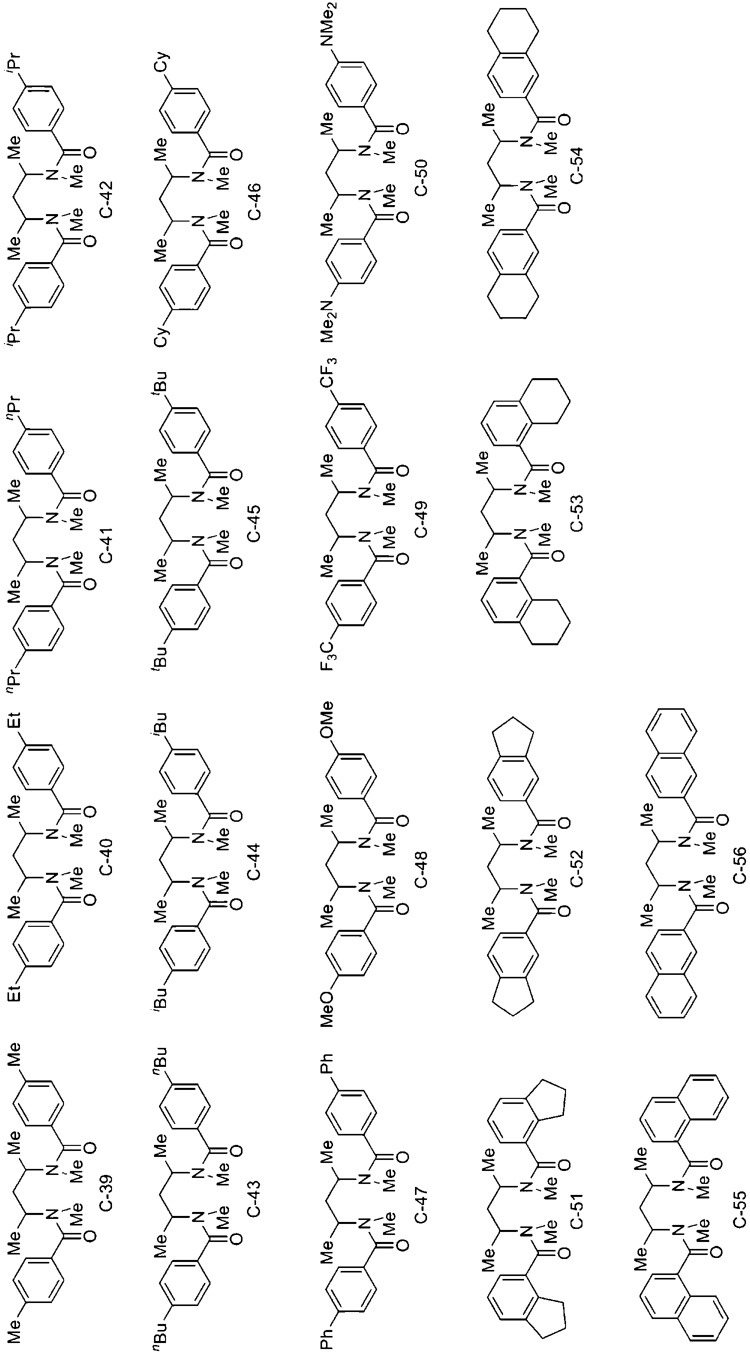

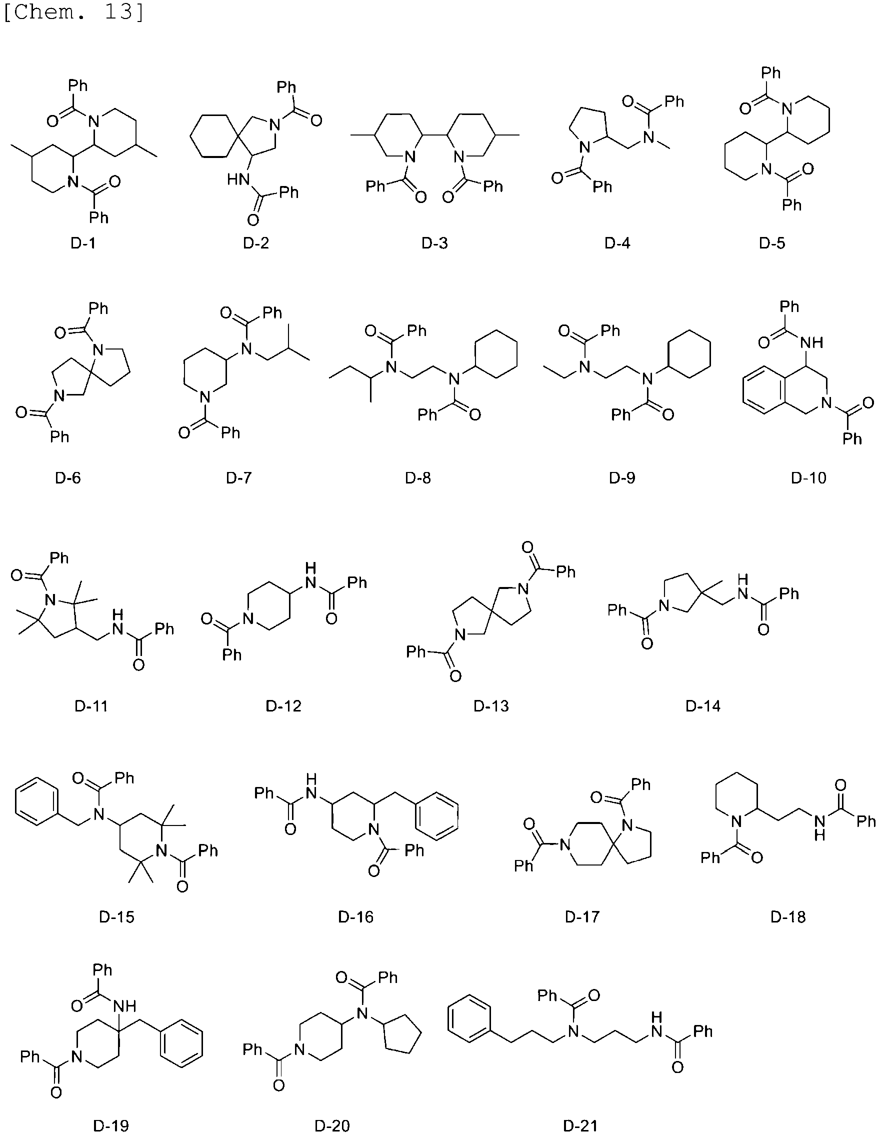

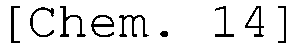

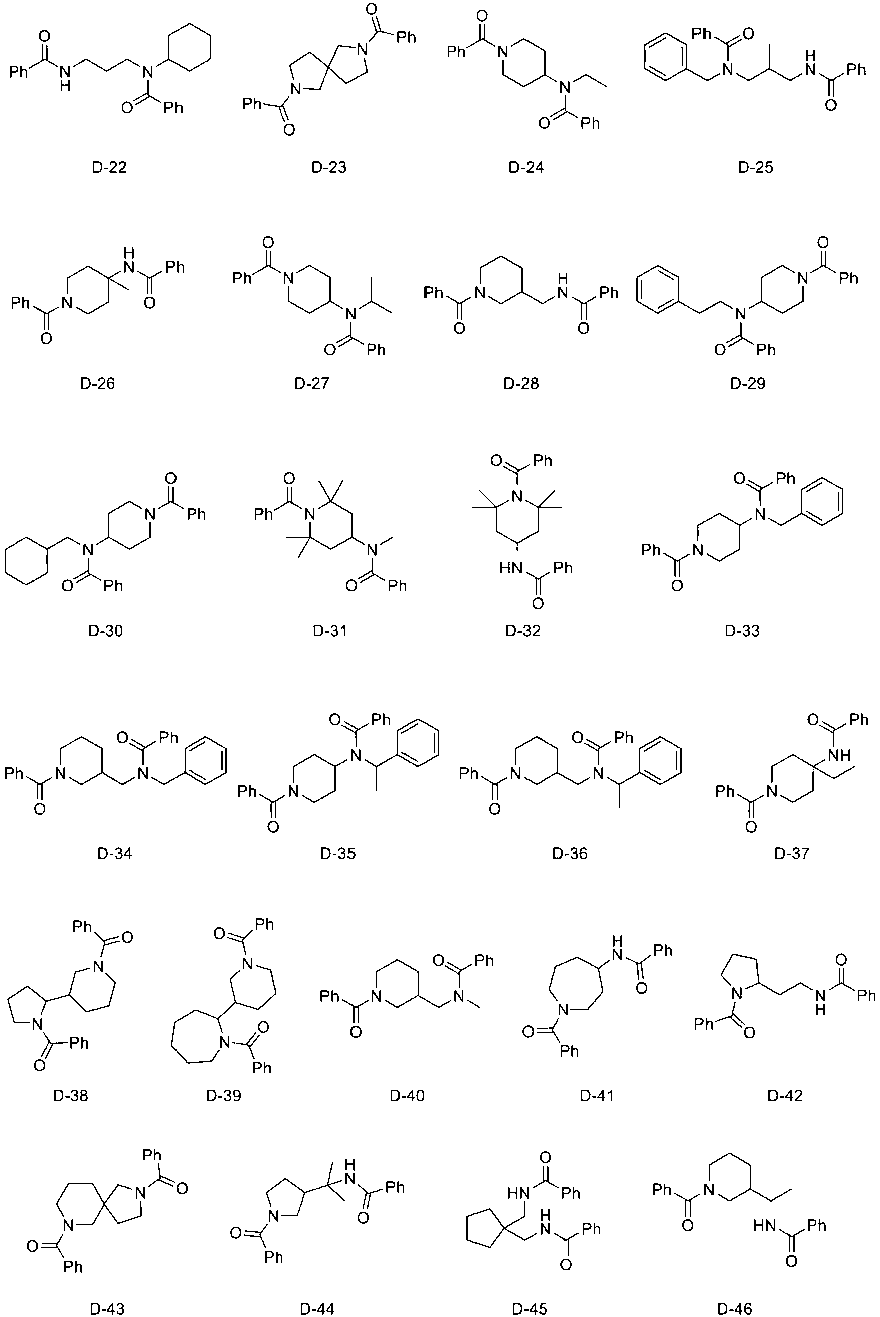

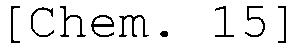

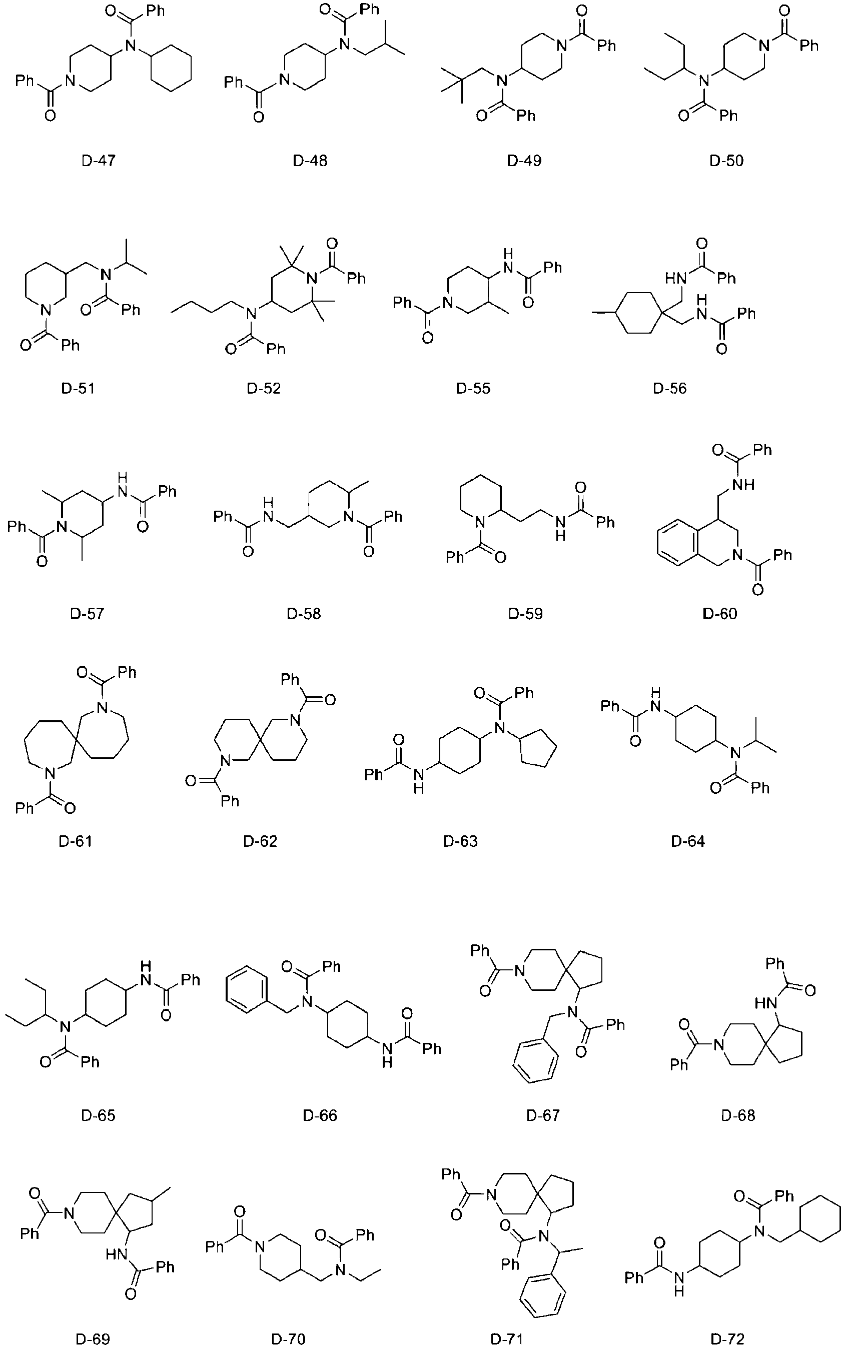

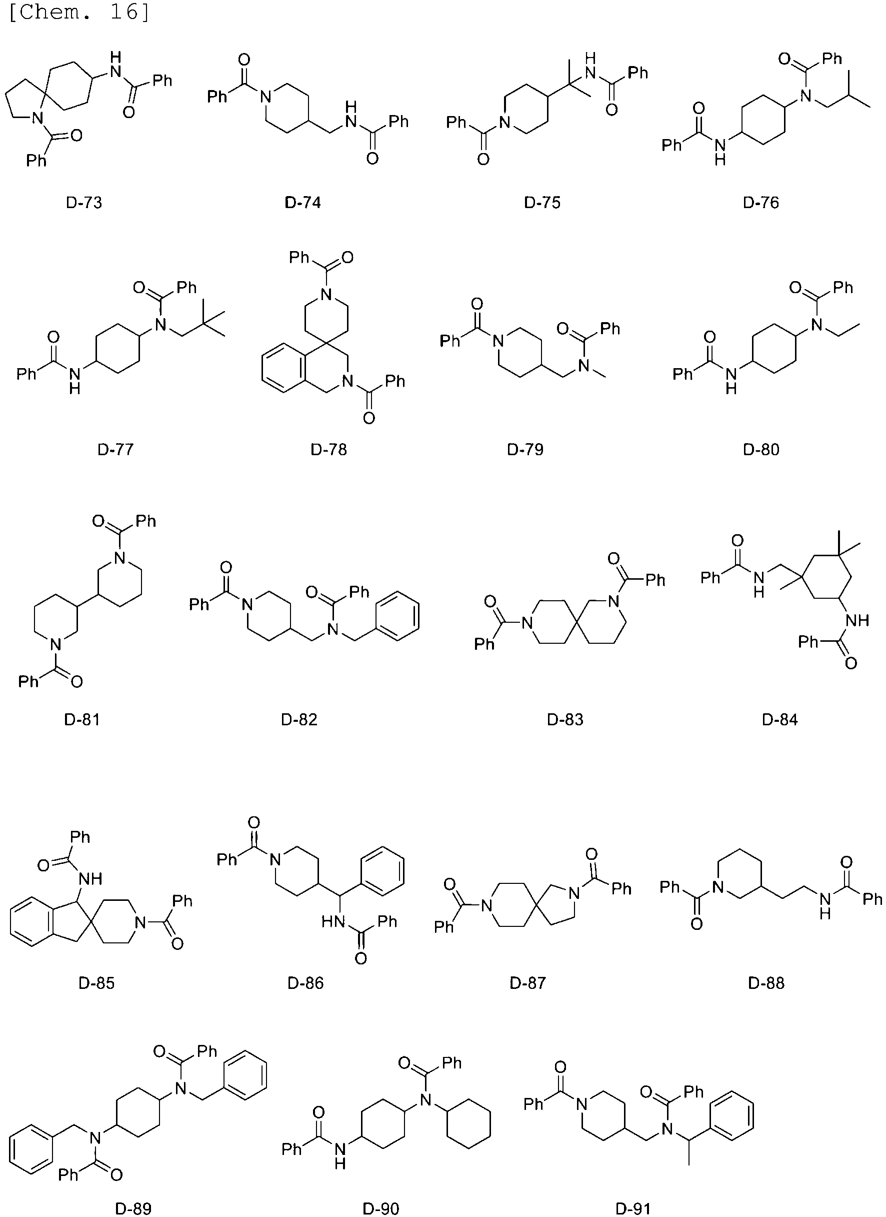

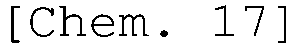

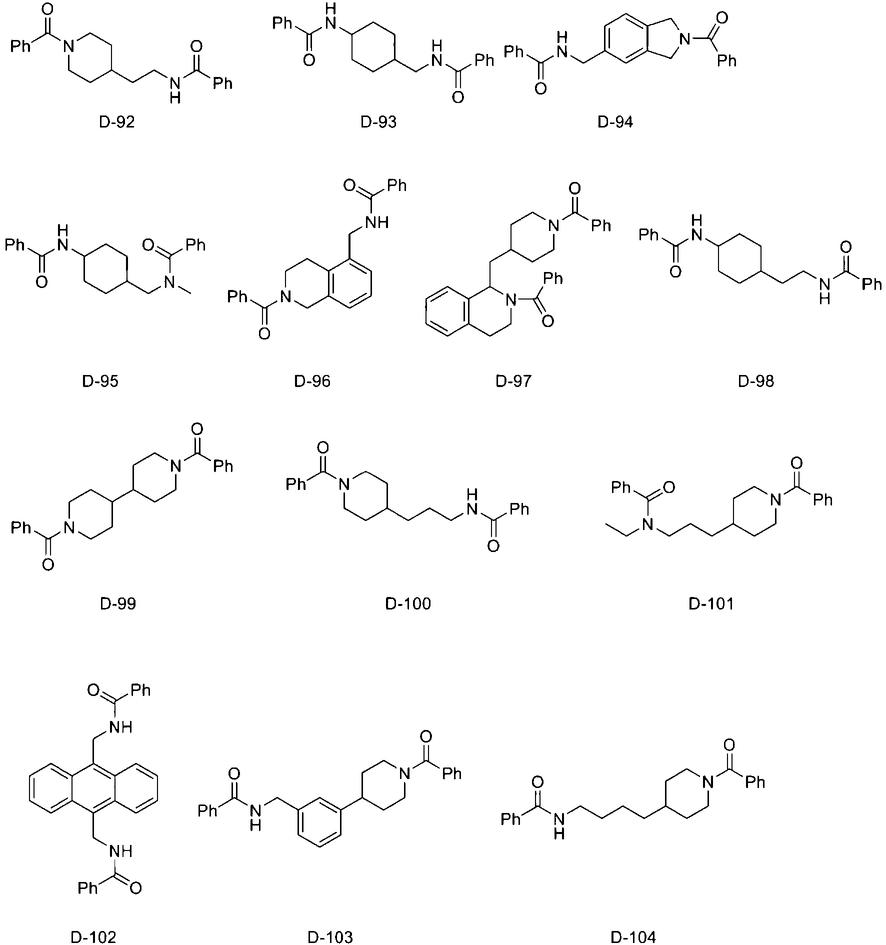

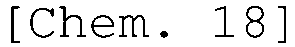

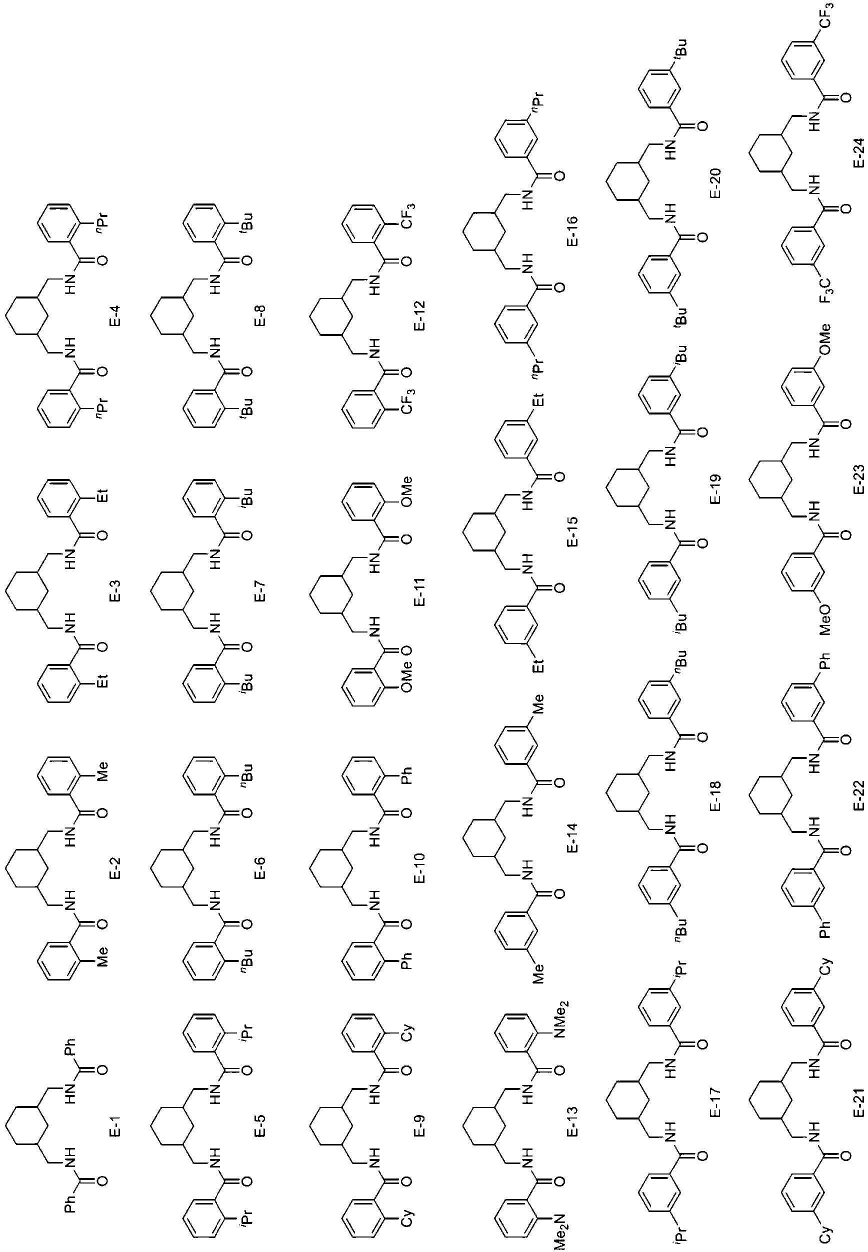

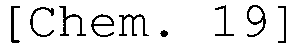

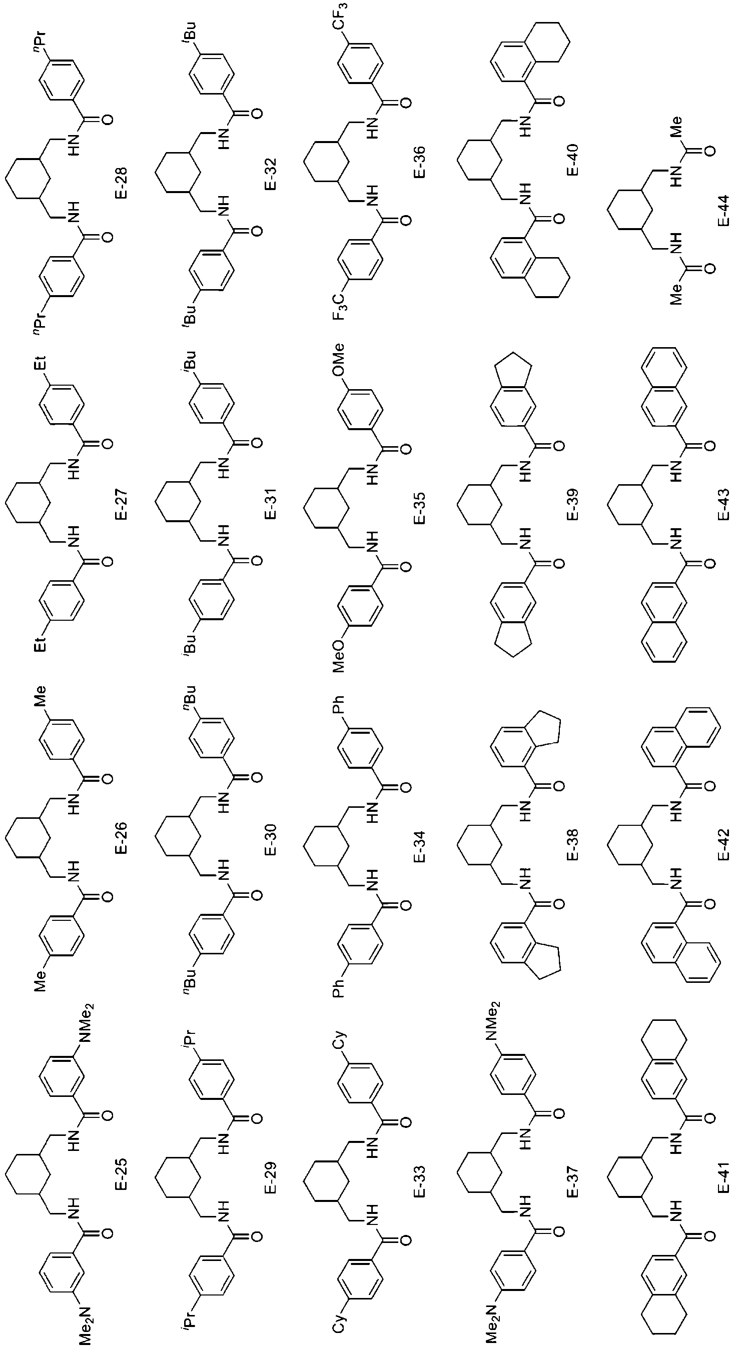

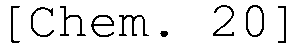

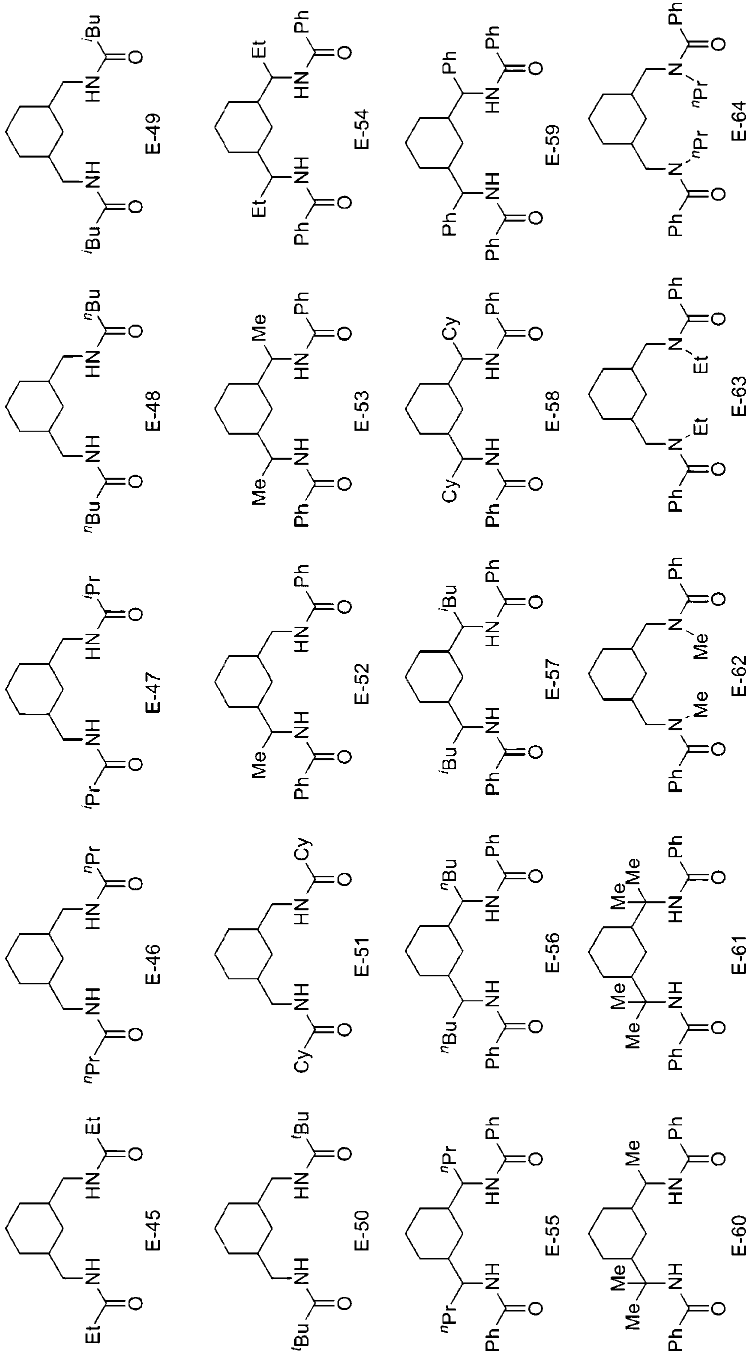

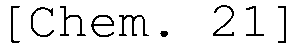

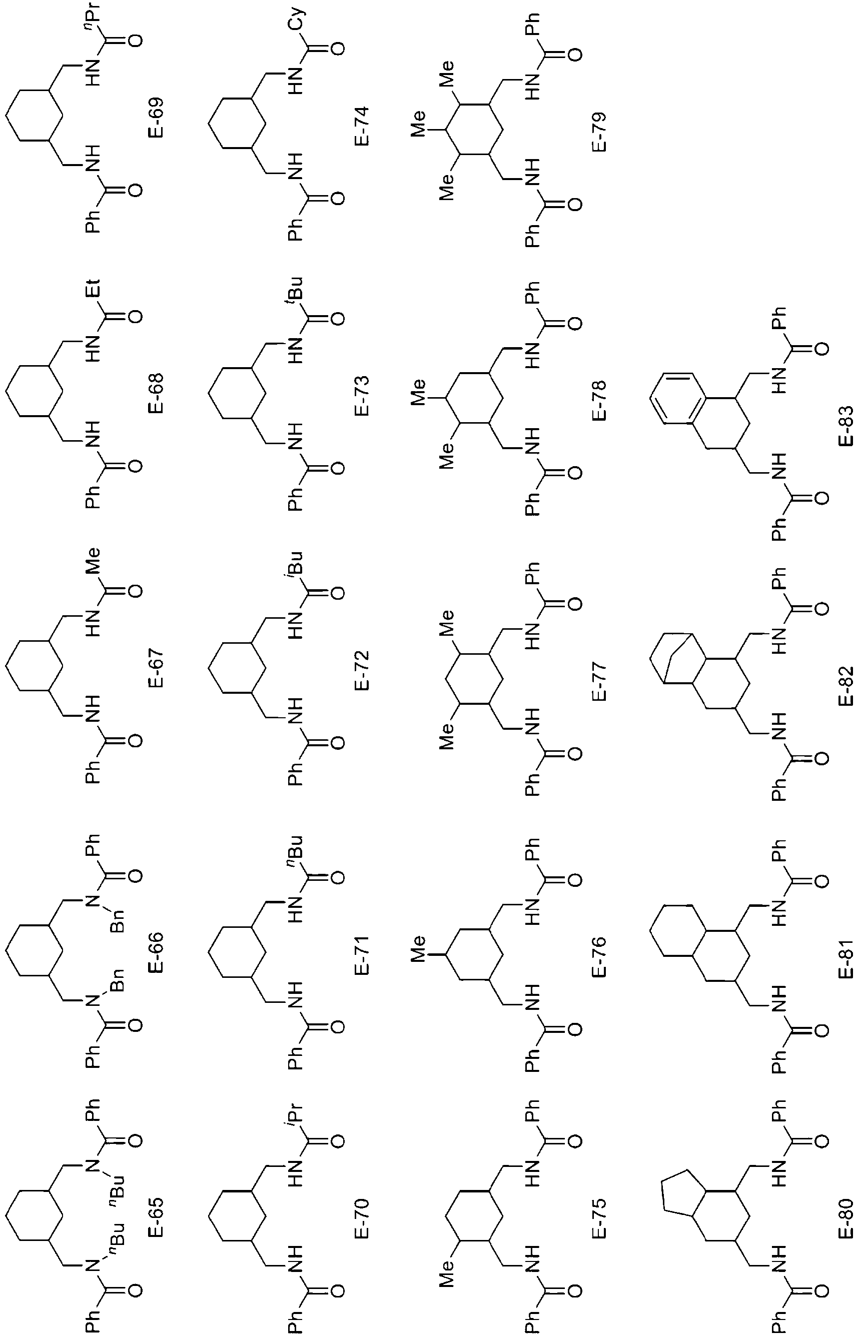

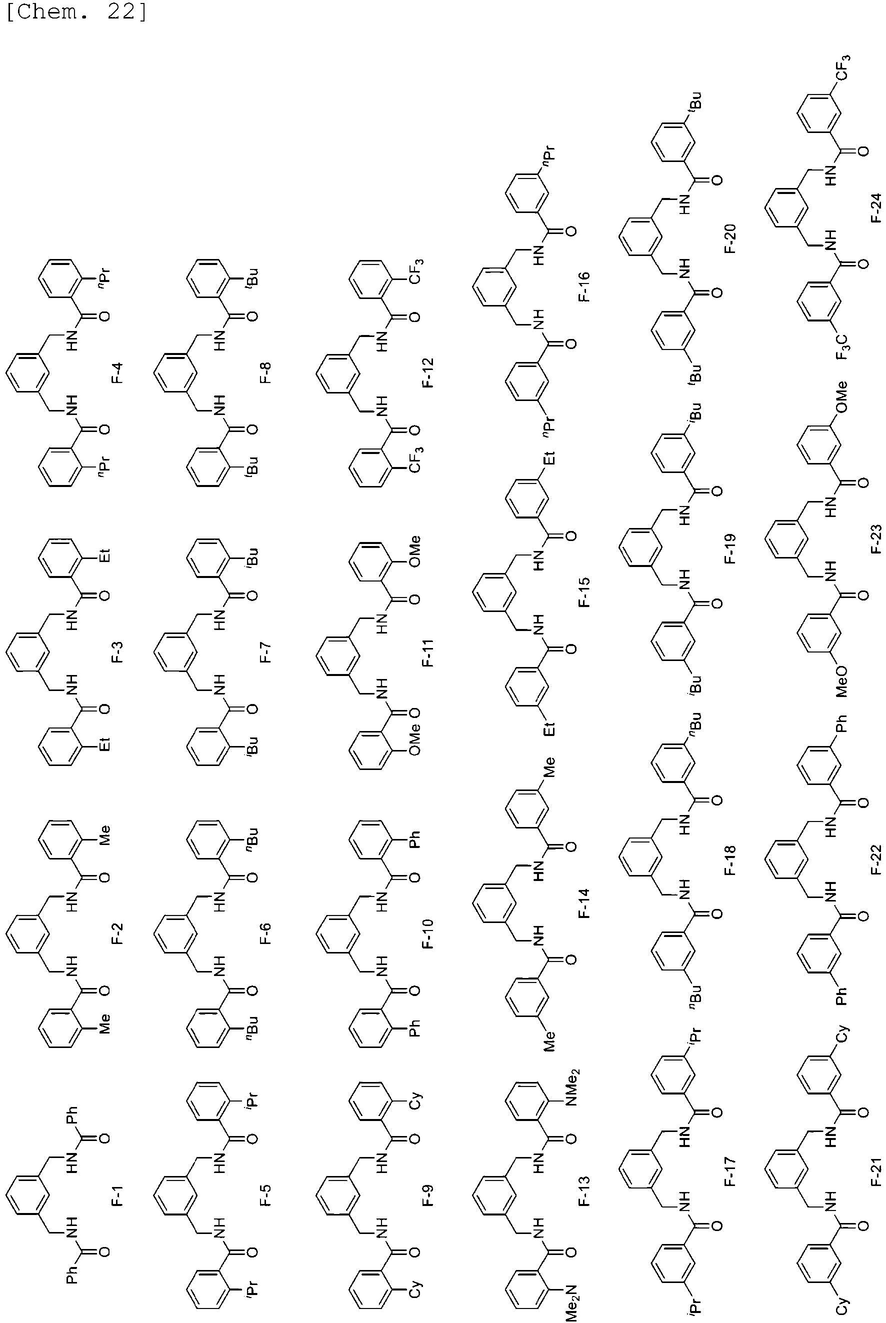

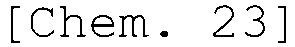

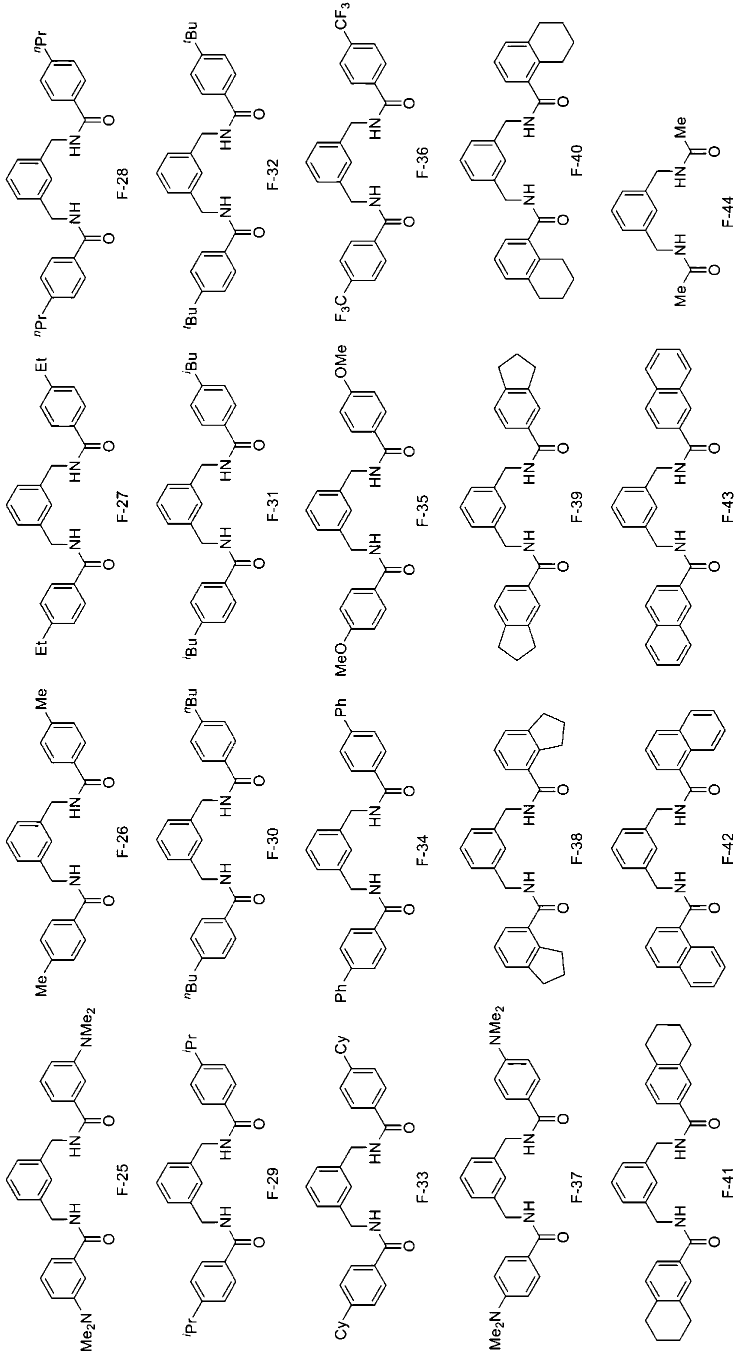

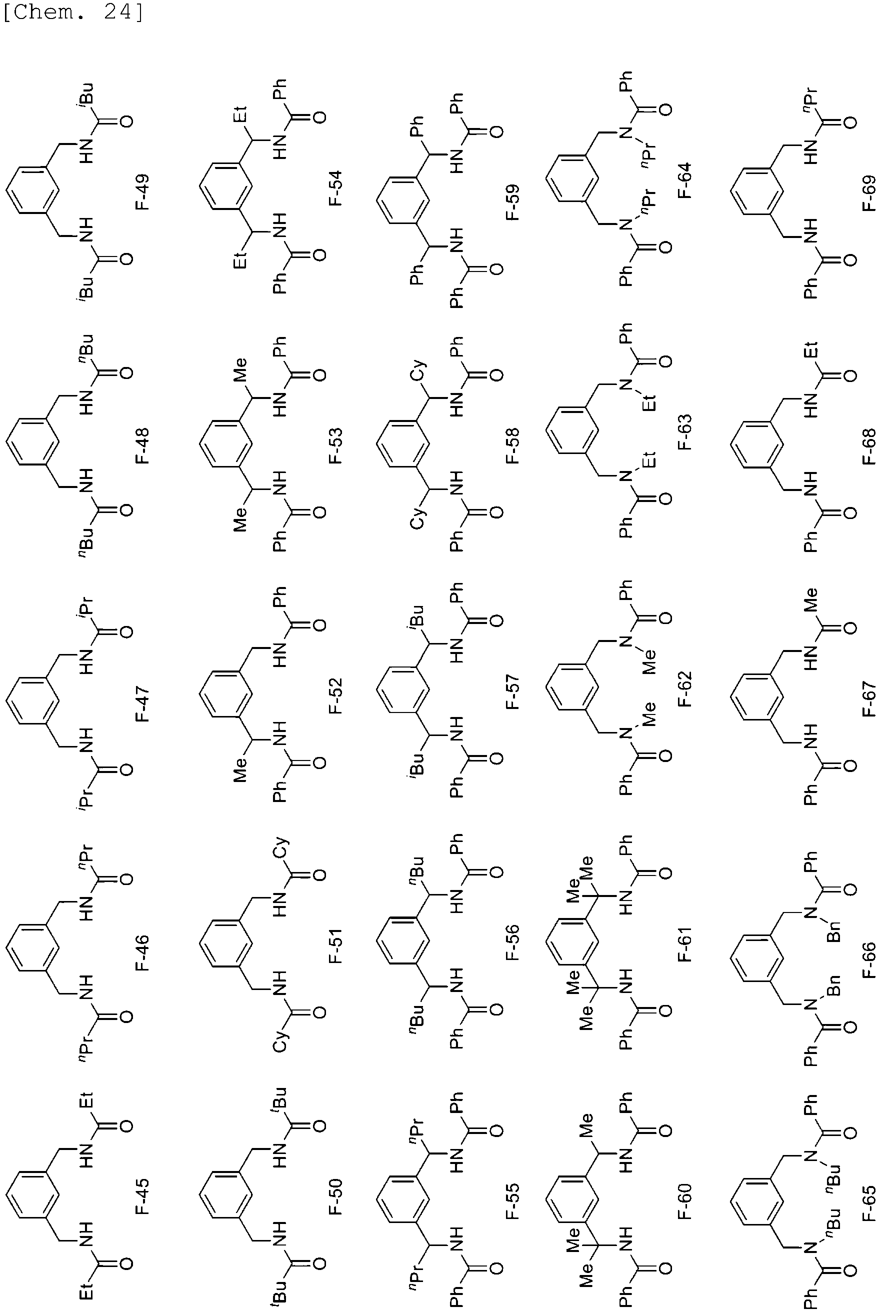

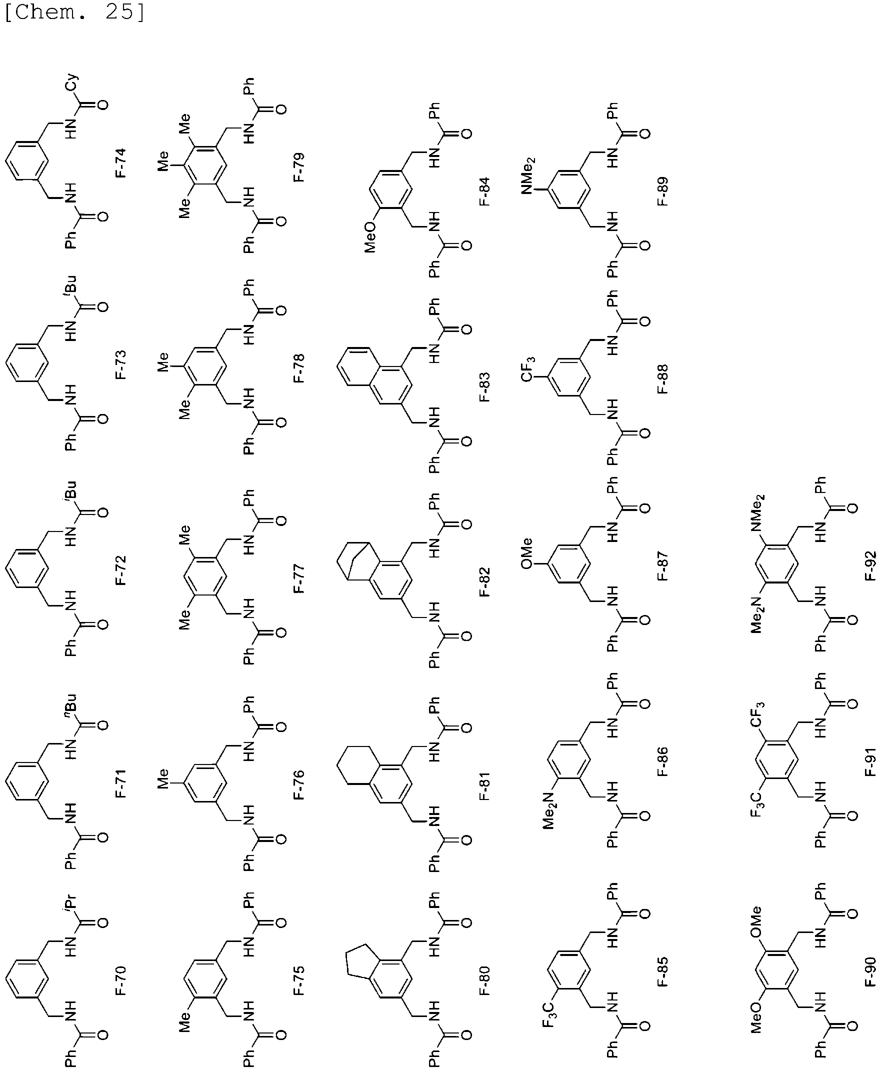

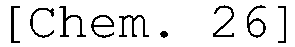

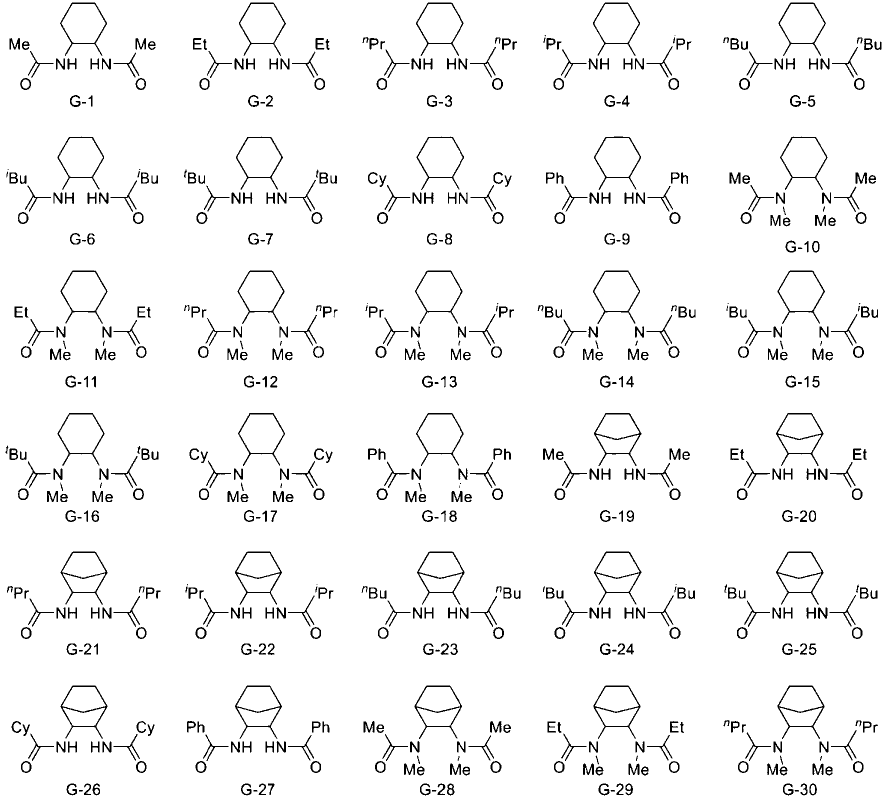

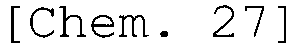

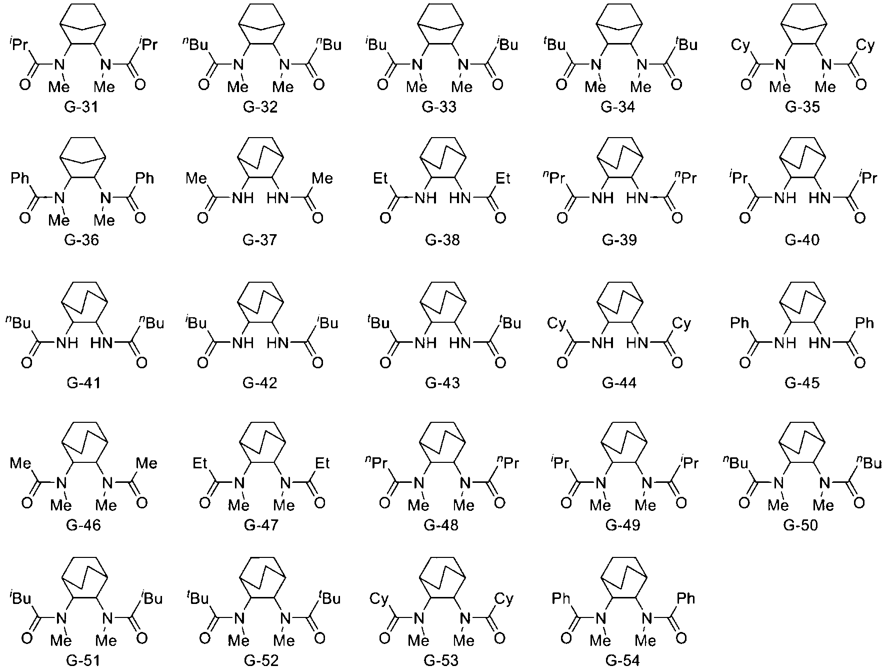

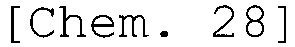

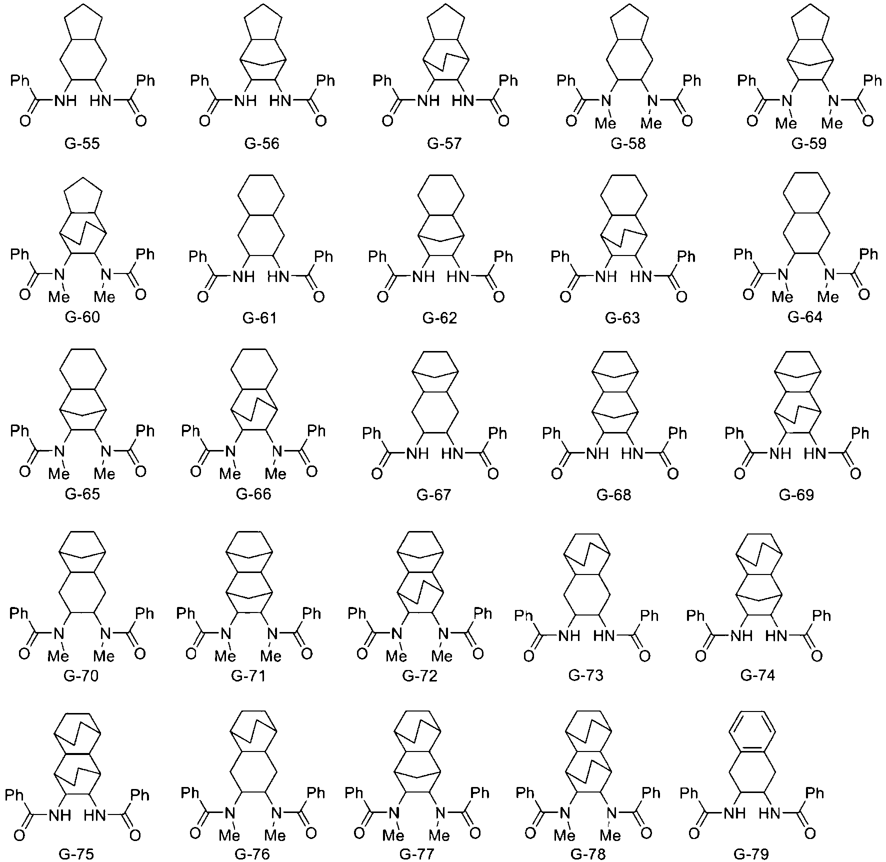

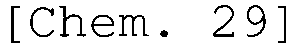

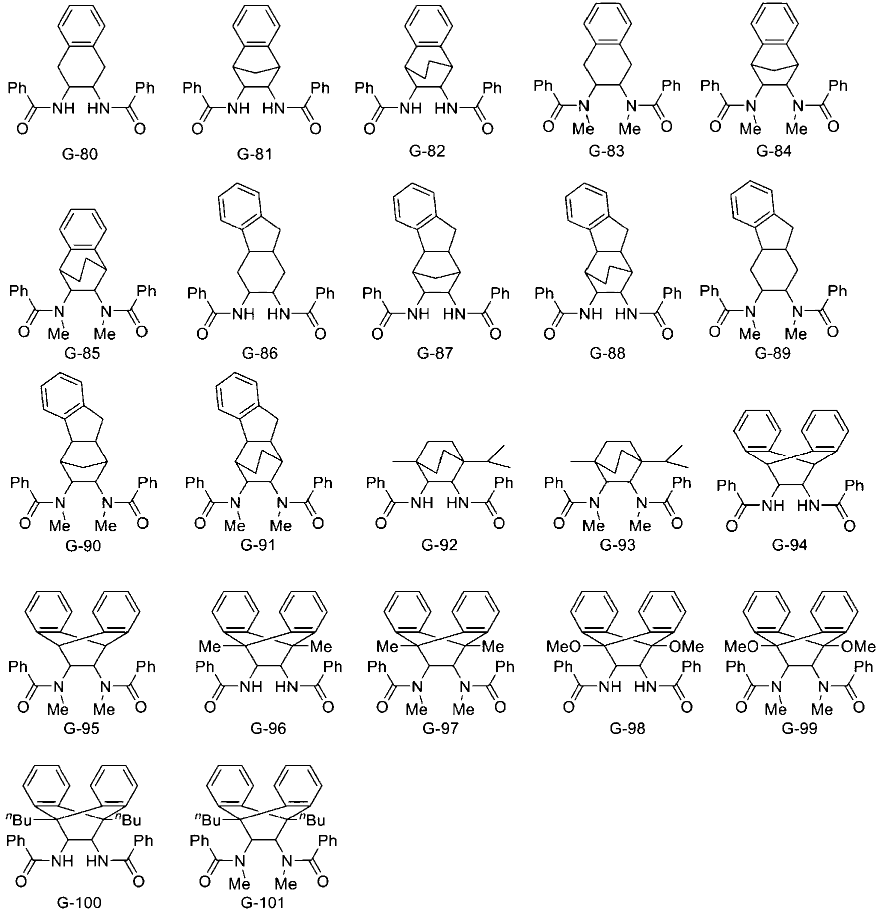

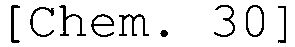

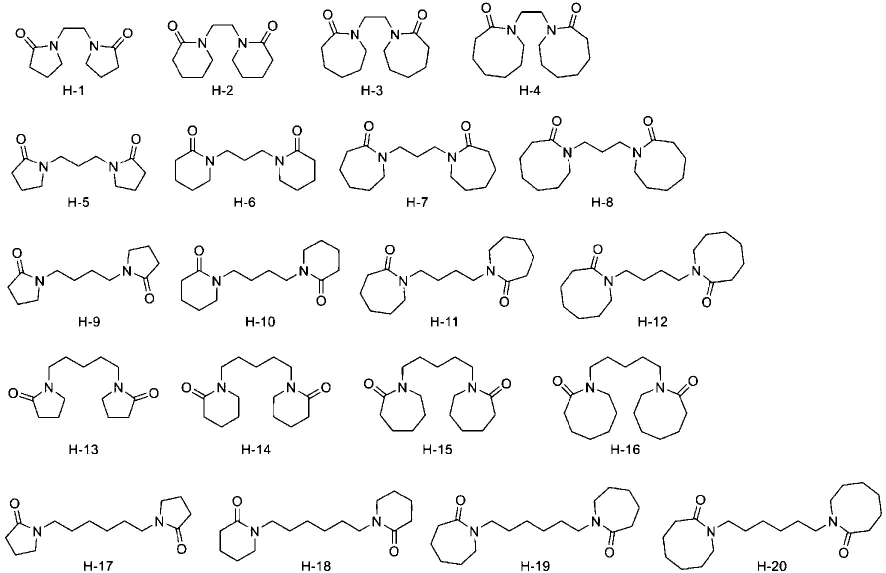

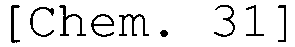

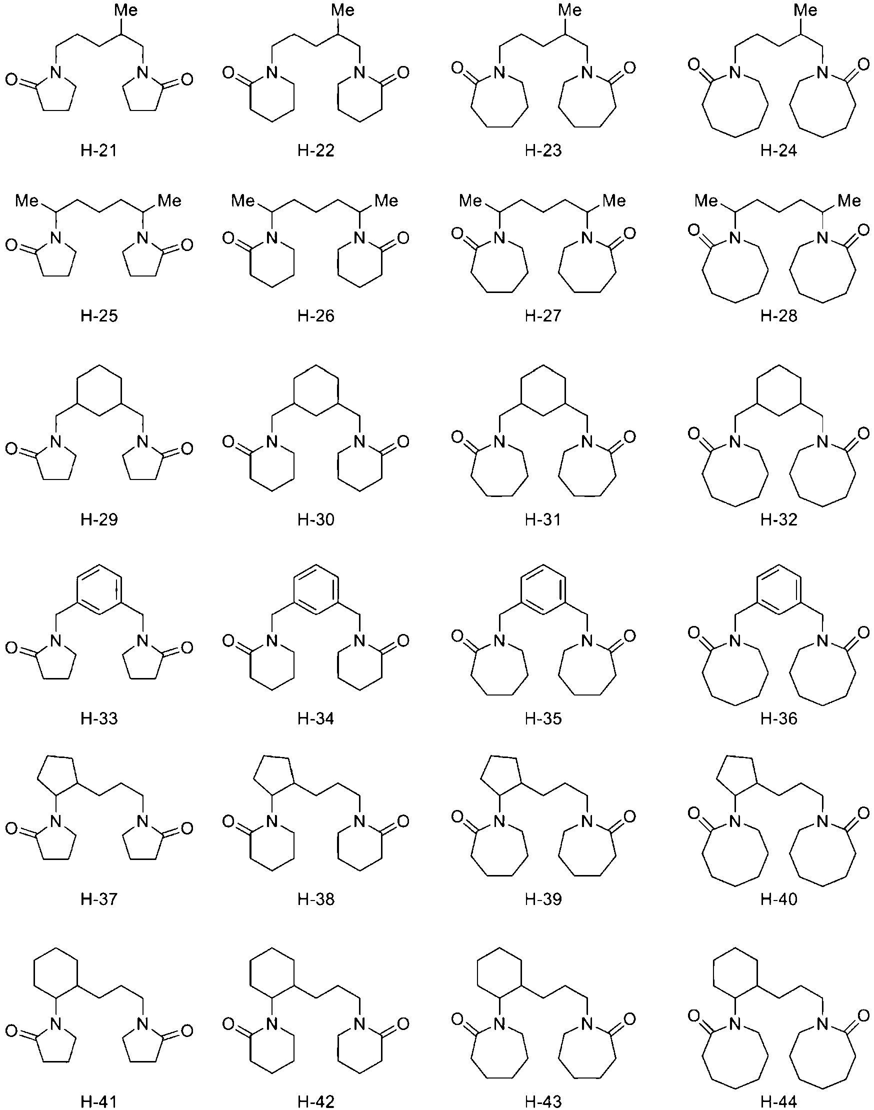

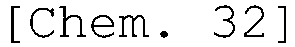

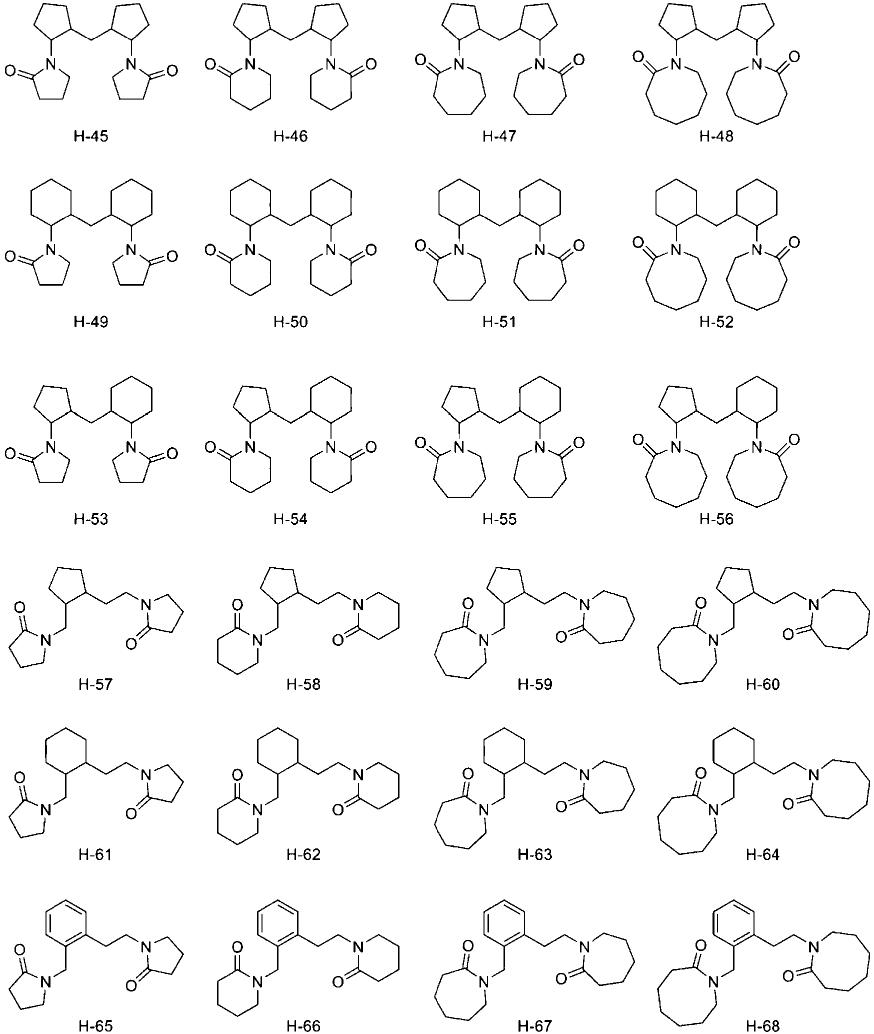

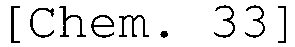

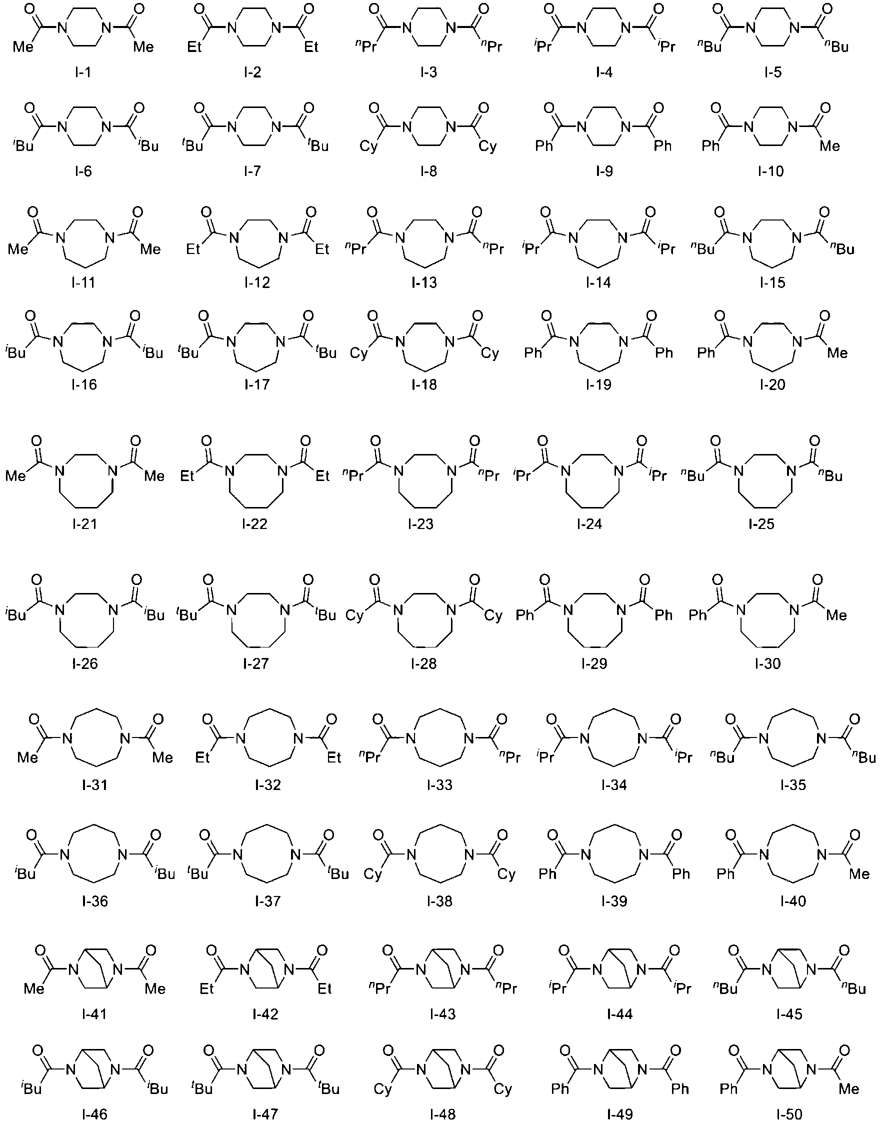

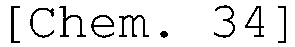

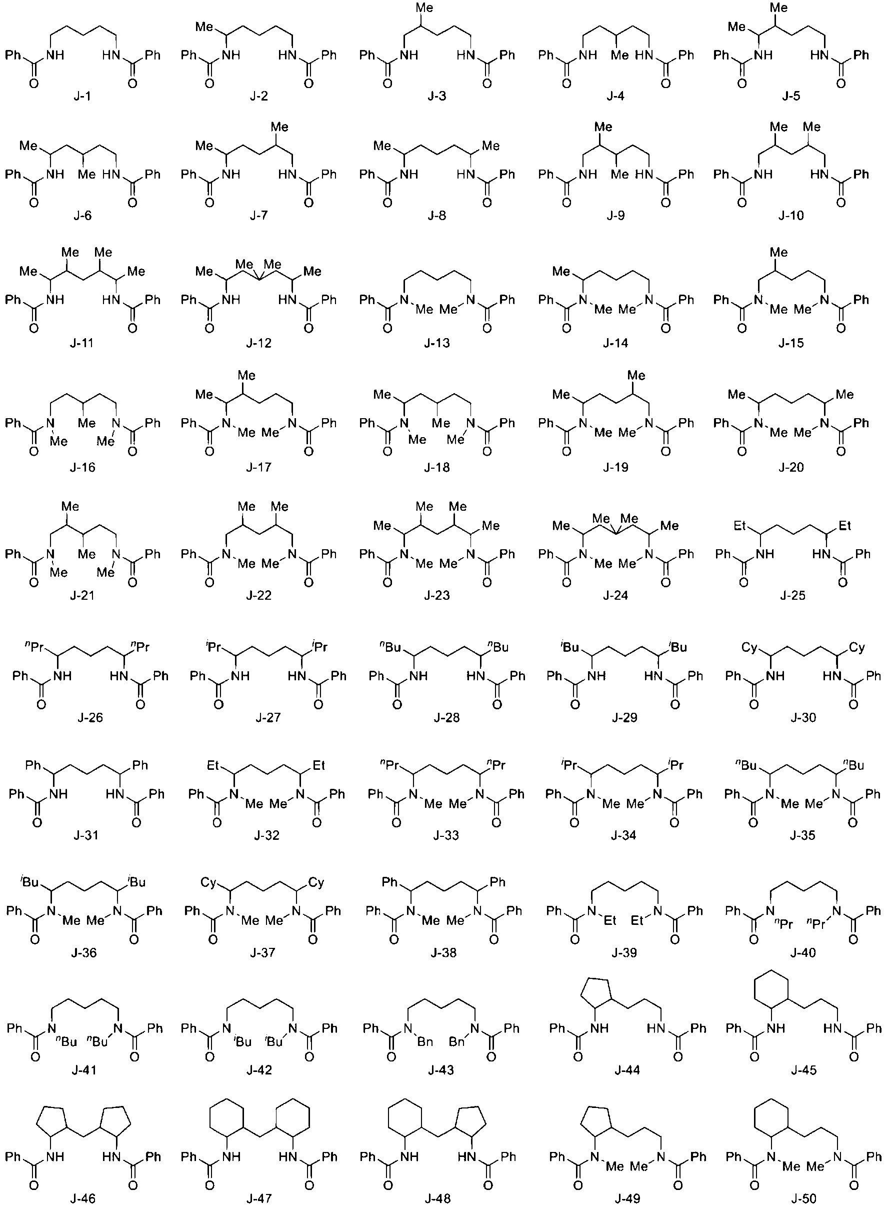

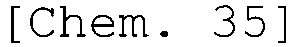

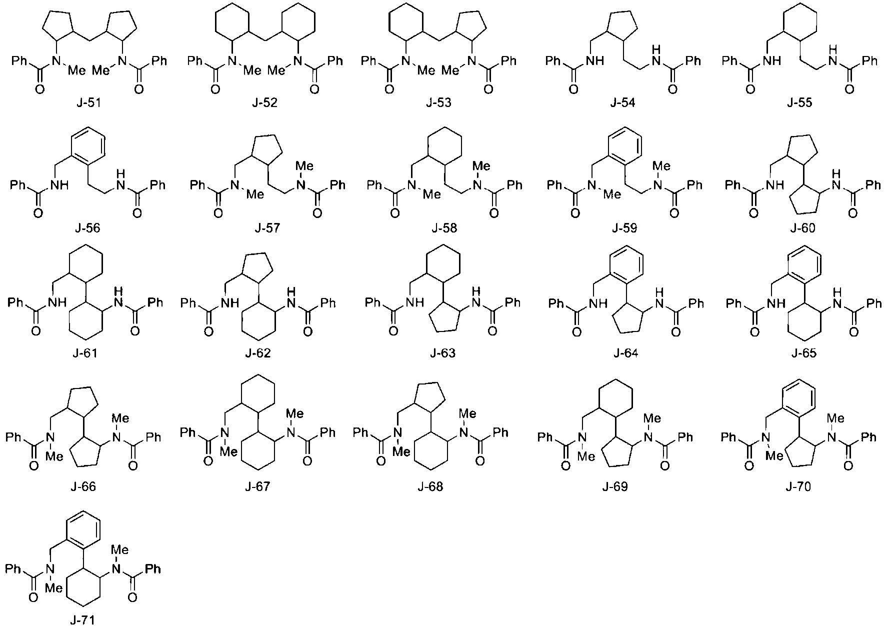

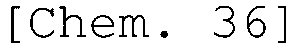

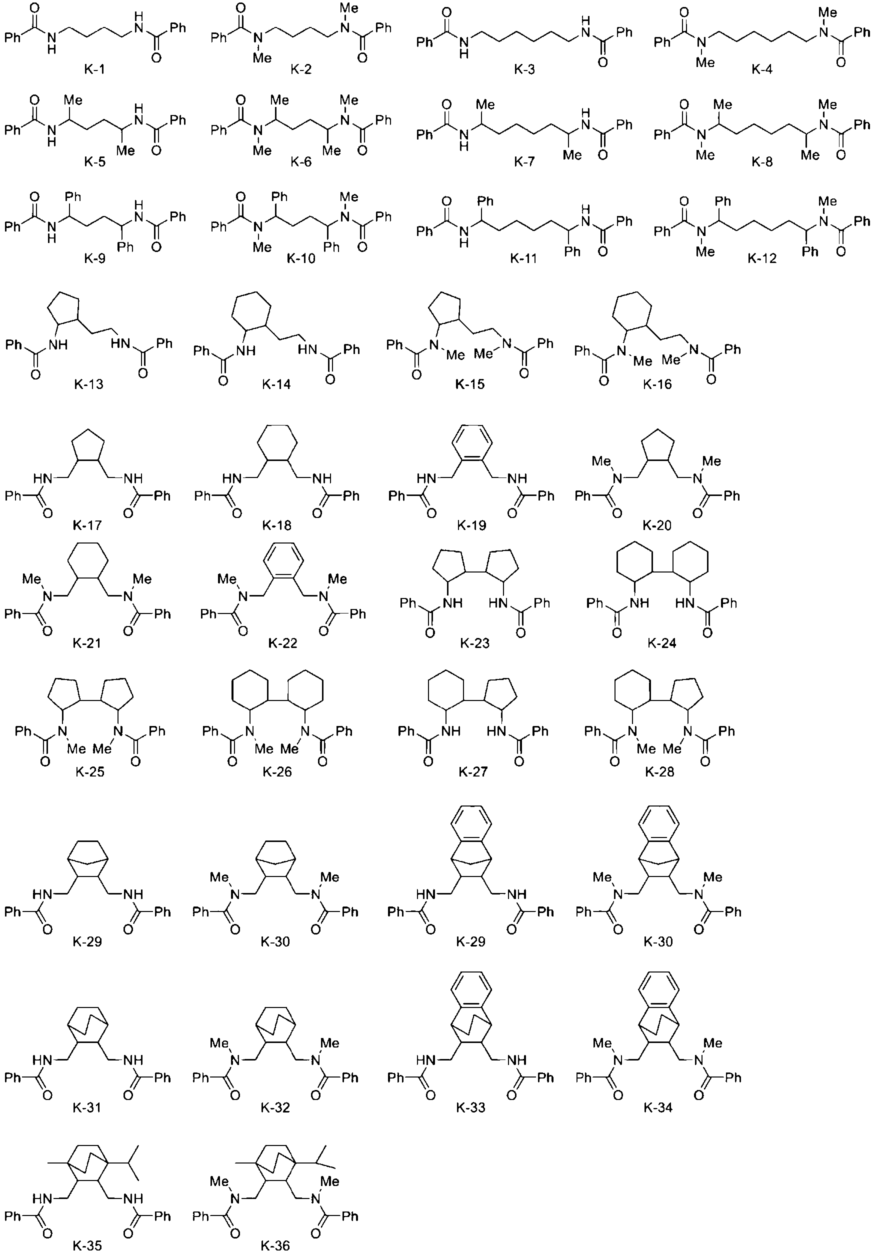

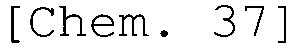

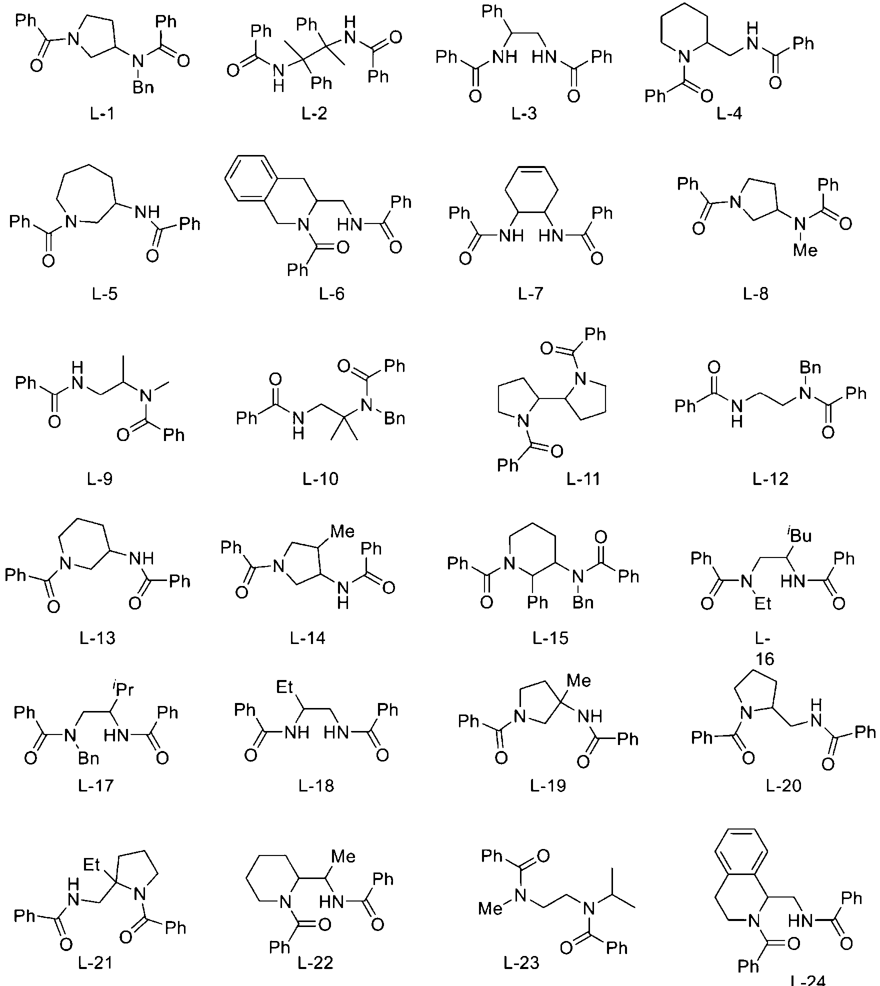

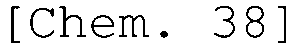

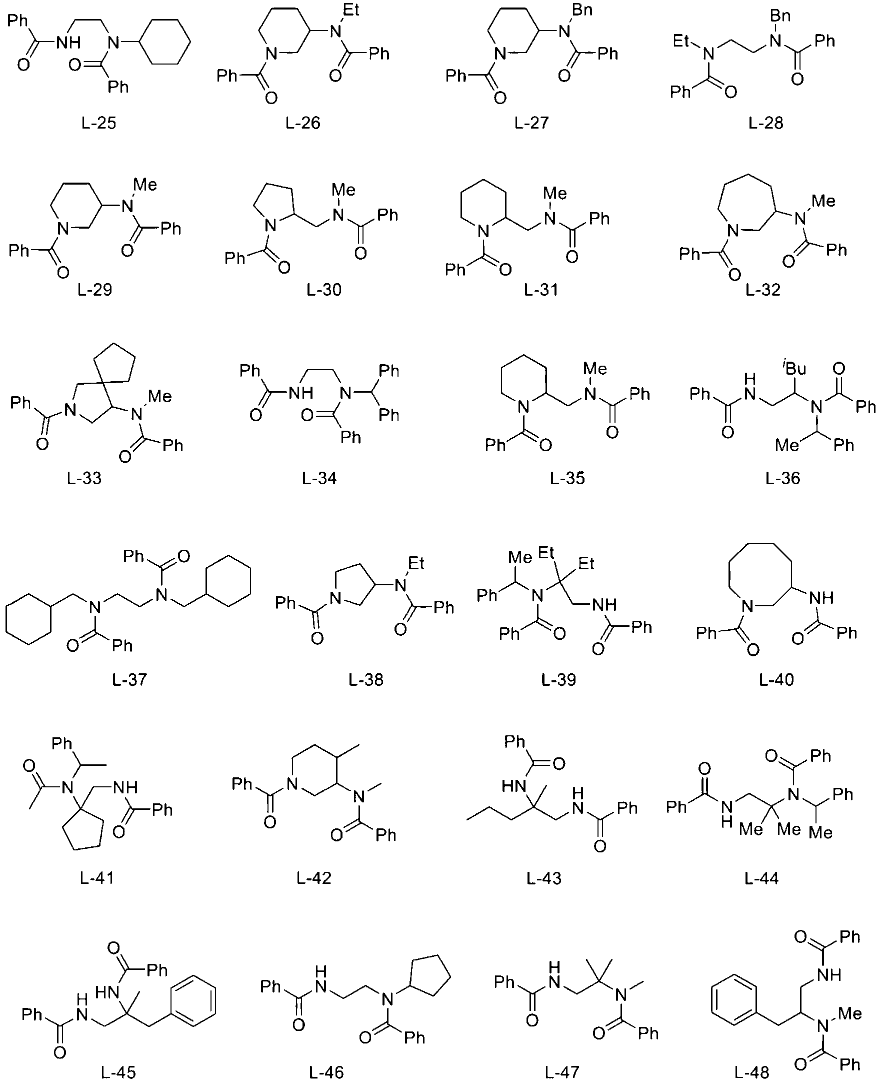

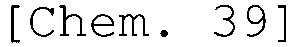

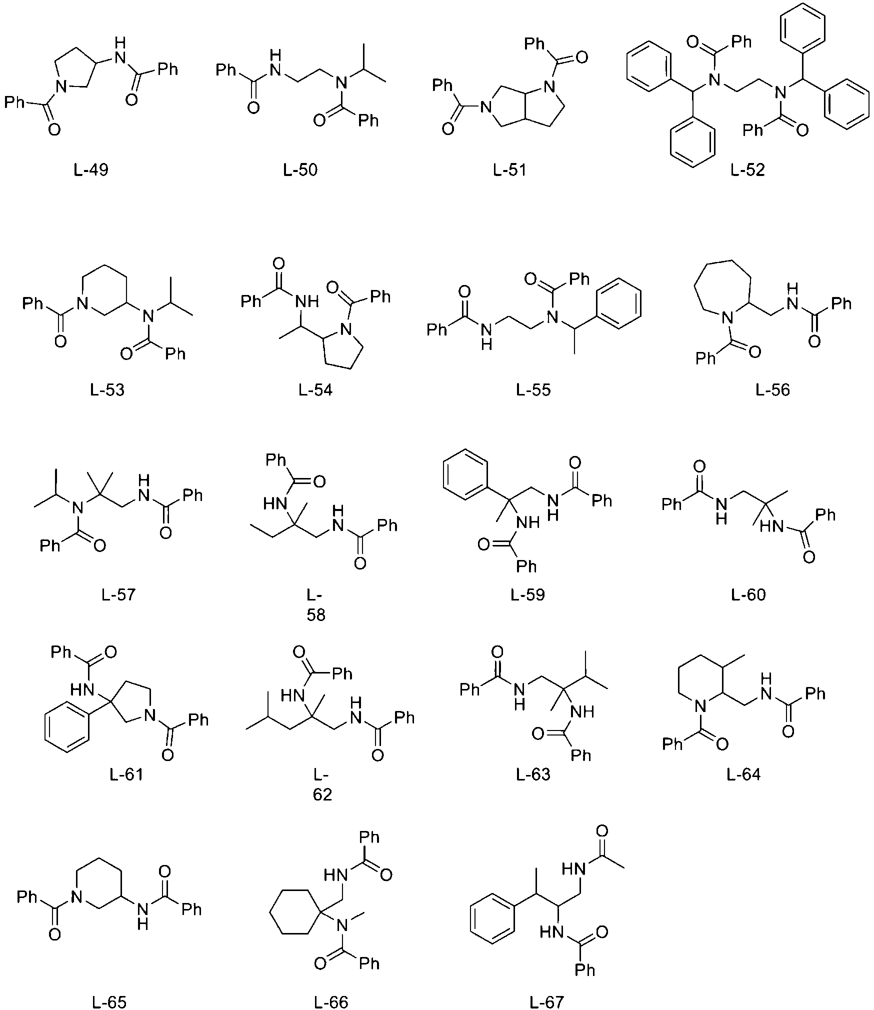

In the structural formulae depicted above, a methyl group is denoted as "Me", an ethyl group is denoted as "Et", a butyl group is denoted as "Bu", and a phenyl group is denoted as "Ph". Also, "i" represents "iso", and "t" represents "tertiary".

One of these compounds may be used singly, or two or more thereof may be used in combination. As long as the purpose of the present invention is not impaired, these amide compounds may be used in combination with a catalyst component (b) and a catalyst component (c) that will be described later.

Also, the amide compound may be formed during the course of preparing the solid titanium catalyst component (I).

There is a tendency that the method for producing an olefin polymer of the present invention likely provides a polymer having a broad molecular weight distribution, and a high melting point and heat of fusion in a highly active manner. Although the reason for this is not known at present, the present inventors believe that, including the contents described above, the amide moiety in the amide compound of the present invention tends to be coordinated relatively firmly with titanium and magnesium in the solid titanium catalyst component, while especially from the viewpoint of rigidity centered around the C¹ carbon and C² carbon that are bonded to nitrogen of the amide groups in the structural formula (1), the amide compound of the present invention is considered to have a loose structure, thus taking conformation with movement in a limited range, and therefore, an olefin polymer with high stereoregularity and broad molecular weight distribution (with a spread on the high molecular weight side) is easily provided. In that case, the stereoregularity of polymers, especially those on the high molecular weight side, is high, making them easily crystallized in spite of their molecular weight, and since the nucleating agent effect is also expressed, it is assumed that a polymer with a high melting point and heat of fusion is easily obtained.

The olefin polymer obtained by the method of the present invention is a polymer obtained using a catalyst that can take conformation with a certain degree of spread, and can thus be a polymer with a spread on the low molecular weight side as well. This may result in more components dissolving in a hydrocarbon solvent such as decane. Such dissolving components are usually feared to weaken the crystalline structure of olefin polymers, but the heat of fusion of the olefin polymer of the present invention tends to be high. This is probably because the nucleating agent effect of the high molecular weight components described above takes precedence.

In addition to the amide compound, a magnesium compound and a titanium compound are used in the preparation of the solid titanium catalyst component (I) of the present invention.

### <Magnesium compound>

Specific examples of such magnesium compounds may include known magnesium compounds such as:
magnesium halides such as magnesium chloride and magnesium bromide;
alkoxymagnesium halides such as methoxymagnesium chloride, ethoxymagnesium chloride, and phenoxymagnesium chloride;
alkoxymagnesium such as ethoxymagnesium, isopropoxymagnesium, butoxymagnesium, and 2-ethylhexoxymagnesium;
aryloxymagnesium such as phenoxymagnesium; and
carboxylic acid salts of magnesium, such as magnesium stearate.

One of these magnesium compounds may be used singly, or two or more thereof may be used in combination. Also, such a magnesium compound may be a complex compound with another metal, a composite compound, or a mixture with another metal compound.

Among these magnesium compounds, a halogen-containing magnesium compound is preferable, and magnesium halide, in particular magnesium chloride, is preferably used. Alkoxymagnesium such as ethoxymagnesium is preferably used as well. The magnesium compound may be a compound that is derived from another substance, such as a compound obtained by bringing an organomagnesium compound such as a Grignard reagent into contact with, for example, titanium halide, silicon halide, or alcohol halide.

### <Titanium compound>

Examples of the titanium compound may include tetravalent titanium compounds represented by the general formula:
Ti(OR')_{g}X_{4-g}, wherein R' is a hydrocarbon group, X is a halogen atom, and g is 0 ≤ g ≤ 4. More specific examples thereof may include:
titanium tetrahalides such as TiCl₄ and TiBr₄;
alkoxytitanium trihalides such as Ti(OCH₃)Cl₃, Ti(OC₂H₅)Cl₃, Ti(O-n-C₄H₉)Cl₃, Ti(OC₂H₅)Br₃, and Ti(O-iso-C₄H₉)Br₃;
alkoxytitanium dihalides such as Ti(OCH₃)₂Cl₂ and Ti(OC₂H₅)₂Cl₂;
alkoxytitanium monohalides such as Ti(OCH₃)₃Cl, Ti(O-n-C₄H₉)₃Cl, and Ti(OC₂H₅)₃Br; and
tetraalkoxytitanium such as Ti(OCH₃)₄, Ti(OC₂H₅)₄, Ti(OC₄H₉)₄, and Ti(O-2-ethylhexyl)₄.

Among these, titanium tetrahalides are preferable, and titanium tetrachloride is particularly preferable. One of these titanium compounds may be used singly, or two or more thereof may be used in combination.

Examples of such magnesium compounds and titanium compounds may also include those described in detail in, for example, Patent Literature 1 and Patent Literature 2.

### <Method for preparing solid titanium catalyst component (I) >

In the preparation of the solid titanium catalyst component (I) used in the present invention, known methods can be used without limitation except that the amide compound described above is used. Examples of specific preferable methods may include the following methods (P-1) to (P-4).

(P-1) Method involving bringing a solid adduct composed of a magnesium compound and a catalyst component (b) described later, the amide compound, and a liquid titanium compound into contact with each other in a suspended state in the presence of an inert hydrocarbon solvent.

(P-2) Method involving bringing a solid adduct composed of a magnesium compound and a catalyst component (b), the amide compound, and a liquid titanium compound into contact with each other in divided portions.

(P-3) Method involving bringing a solid adduct composed of a magnesium compound and a catalyst component (b), the amide compound, and a liquid titanium compound into contact with each other in a suspended state and in divided portions in the presence of an inert hydrocarbon solvent.

(P-4) Method involving bringing a liquid magnesium compound composed of a magnesium compound and a catalyst component (b), a liquid titanium compound, and the amide compound into contact with each other.

The reaction temperature is in a range of preferably - 30°C to 150°C, more preferably -25°C to 130°C, and even more preferably -25°C to 120°C.

Production of the solid titanium catalyst component can be performed also in the presence of a known medium as necessary. Examples of the medium include slightly polar aromatic hydrocarbons such as toluene and known aliphatic hydrocarbons and alicyclic hydrocarbon compounds such as heptane, octane, decane, and cyclohexane, and preferable examples among these are aliphatic hydrocarbons.

When the reaction is performed within the above range, the effect of obtaining a polymer having a broad molecular weight distribution, activity, and the stereoregularity of the resulting polymer can be simultaneously achieved at a higher level.

### <Catalyst component (b)>

The catalyst component (b) used to form the solid adduct and the liquid magnesium compound is preferably a known compound capable of solubilizing the magnesium compound in a temperature range of about room temperature to 300°C, and for example, alcohols, aldehydes, amines, carboxylic acids, and mixtures thereof are preferable. Examples of these compounds may include those described in detail in Patent Literature 1 and Patent Literature 2.

More specific examples of alcohols capable of solubilizing the magnesium compound may include:
aliphatic alcohols such as methanol, ethanol, propanol, butanol, isobutanol, ethylene glycol, 2-methylpentanol, 2-ethylbutanol, n-heptanol, n-octanol, 2-ethylhexanol, decanol, and dodecanol;
alicyclic alcohols such as cyclohexanol and methylcyclohexanol;
aromatic alcohols such as benzyl alcohol and methylbenzyl alcohol; and
aliphatic alcohols having an alkoxy group, such as n-butyl cellosolve.

Examples of carboxylic acids may include organic carboxylic acids having 7 or more carbon atoms, such as caprylic acid and 2-ethylhexanoic acid. Examples of aldehydes may include aldehydes having 7 or more carbon atoms, such as capric aldehyde and 2-ethylhexyl aldehyde.

Examples of amines may include amines having 6 or more carbon atoms, such as heptylamine, octylamine, nonylamine, laurylamine, and 2-ethylhexylamine.

Preferable examples of the catalyst component (b) are the above alcohols, and for example, ethanol, propanol, butanol, isobutanol, hexanol, 2-ethylhexanole, and decanol are particularly preferable.

While the amounts of the magnesium compound and the catalyst component (b) used when preparing the solid adduct and the liquid magnesium compound also vary according to, for example, the kinds and contact conditions, the magnesium compound is used in an amount of 0.1 to 20 mol/liter and preferably 0.5 to 5 mol/liter based on the unit volume of the catalyst component (b). Also, a medium that is inert to the solid adduct can be used in combination as necessary. Preferable examples of the medium include known hydrocarbon compounds such as heptane, octane, and decane.

While the compositional ratio of magnesium to the catalyst component (b) in the resulting solid adduct and the liquid magnesium compound cannot be generally specified because the ratio varies according to the kind of the compound used, the catalyst component (b) per mole of magnesium in the magnesium compound is in a range of preferably 2.0 mol or more, more preferably 2.2 mol or more, even more preferably 2.6 mol or more, and particularly preferably 2.7 mol or more, and preferably 5 mol or less.

### <Aromatic carboxylic acid ester and/or compound having two or more ether bonds via multiple carbon atoms>

The solid titanium catalyst component (I) of the present invention may further contain an aromatic carboxylic acid ester and/or a compound having two or more ether bonds via multiple carbon atoms (hereinafter also referred to as a "catalyst component (c)"). The catalyst component (c) when contained in the solid titanium catalyst component (I) of the present invention may increase activity and stereoregularity and further broaden the molecular weight distribution.

Known aromatic carboxylic acid esters and polyether compounds that are preferably used in conventional catalysts for olefin polymerization, such as compounds described in Patent Literature 2 and JP2001-354714A, can be used without limitations as the catalyst component (c).

Specific examples of the aromatic carboxylic acid esters include aromatic carboxylic acid monoesters such as benzoic acid esters and toluic acid esters, and aromatic polycarboxylic acid esters such as phthalic acid esters. Among these, aromatic polycarboxylic acid esters are preferable, and phthalic acid esters are more preferable. The phthalic acid esters are preferably alkyl phthalates such as ethyl phthalate, n-butyl phthalate, isobutyl phthalate, hexyl phthalate, and heptyl phthalate, and diisobutyl phthalate is particularly preferable.

More specific examples of the polyether compound include compounds represented by the following formula (3): 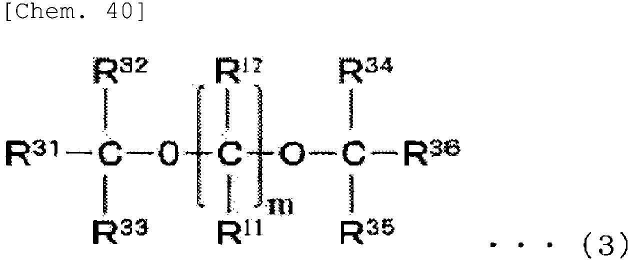 wherein m is an integer of 1 ≤ m ≤ 10 and more preferably an integer of 3 ≤ m ≤ 10; and R¹¹, R¹², and R³¹ to R³⁶ are each independently a hydrogen atom or a substituent having at least one element selected from carbon, hydrogen, oxygen, fluorine, chlorine, bromine, iodine, nitrogen, sulfur, phosphorus, boron, and silicon.

When m is 2 or more, a plurality of R¹¹ and R¹² may be the same or different. Any R¹¹, R¹², R³¹ to R³⁶, and preferably R¹¹ and R¹², may together form a ring other than a benzene ring.

Specific examples of such compounds may include:
monosubstituted dialkoxypropanes such as 2-isopropyl-1,3-dimethoxypropane, 2-s-butyl-1,3-dimethoxypropane, and 2-cumyl-1,3-dimethoxypropane;
disubstituted dialkoxypropanes such as 2-isopropyl-2-isobutyl-1,3-dimethoxypropane, 2,2-dicyclohexyl-1,3-dimethoxypropane, 2-methyl-2-isopropyl-1,3-dimethoxypropane, 2-methyl-2-cyclohexyl-1,3-dimethoxypropane, 2-methyl-2-isobutyl-1,3-dimethoxypropane, 2,2-diisobutyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2,2-di-s-butyl-1,3-dimethoxypropane, 2,2-dineopentyl-1,3-dimethoxypropane, 2-isopropyl-2-isopentyl-1,3-dimethoxypropane, and 2-cyclohexyl-2-cyclohexylmethyl-1,3-dimethoxypropane;
dialkoxyalkanes such as 2,3-dicyclohexyl-1,4-diethoxybutane, 2,3-dicyclohexyl-1,4-diethoxybutane, 2,3-diisopropyl-1,4-diethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, and 2,4-diisoamyl-1,5-dimethoxypentane;
trialkoxyalkanes such as 2-methyl-2-methoxymethyl-1,3-dimethoxypropane, 2-cyclohexyl-2-ethoxymethyl-1,3-diethoxypropane, and 2-cyclohexyl-2-methoxymethyl-1,3-dimethoxypropane; and
dialkoxycycloalkanes such as 2,2-diisobutyl-1,3-dimethoxy-4-cyclohexenyl, 2-isopropyl-2-isoamyl-1,3-dimethoxy-4-cyclohexenyl, 2-cyclohexyl-2-methoxymethyl-1,3-dimethoxy-4-cyclohexenyl, 2-isopropyl-2-methoxymethyl-1,3-dimethoxy-4-cyclohexenyl, 2-isobutyl-2-methoxymethyl-1,3-dimethoxy-4-cyclohexenyl, 2-cyclohexyl-2-ethoxymethyl-1,3-dimethoxy-4-cyclohexenyl, 2-isopropyl-2-ethoxymethyl-1,3-dimethoxy-4-cyclohexenyl, and 2-isobutyl-2-ethoxymethyl-1,3-dimethoxy-4-cyclohexenyl.

Among these, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl -1,3-dimethoxypropane, and 2,2-bis(cyclohexylmethyl) 1,3-dimethoxypropane are particularly preferable.

One of these compounds may be used singly, or two or more may be used in combination.

The amide compound, the catalyst component (b), and the catalyst component (c) as above can be generally regarded as belonging to components that are called electron donors by those skilled in the art. The electron donor components are known to show, for example, the effect of increasing the stereoregularity of the resulting polymer, the effect of controlling the compositional distribution of the resulting copolymer, the aggregating-agent effect of controlling the particle shape and the particle size of catalyst particles, while maintaining the high catalyst activity.

The amide compound of the present invention is considered as also showing the effect capable of further controlling the molecular weight distribution by the electron donor.

In the solid titanium catalyst component (I) used in the present invention, halogen/titanium (an atomic ratio) (i.e., the number of moles of halogen atoms/the number of moles of titanium atoms) is desirably 2 to 100 and preferably 4 to 90; the amide compound/titanium (a molar ratio) (i.e., the number of moles of the amide compound/the number of moles of titanium atoms) is desirably 0.01 to 100 and preferably 0.2 to 10; and regarding the catalyst component (b) and the catalyst component (c), the catalyst component (b)/titanium atoms (a molar ratio) is desirably 0 to 100 and preferably 0 to 10, and the catalyst component (c)/titanium atoms (a molar ratio) is desirably 0 to 100 and preferably 0 to 10.

Magnesium/titanium (an atomic ratio) (i.e., the number of moles of magnesium atoms/the number of moles of titanium atoms) is desirably 2 to 100 and preferably 4 to 50.

The content of components that may be contained other than the amide compound described above, such as the catalyst component (b) and the catalyst component (c), is preferably 20 wt% or less and more preferably 10 wt% or less based on 100 wt% of the amide compound.

As for the more detailed conditions for preparing the solid titanium catalyst component (I), the conditions described in, for example, EP585869A1 (the specification of European Patent Application Publication No. 0585869) and Patent Literature 2 can be preferably used except that the amide compound is used.

### [Catalyst for olefin polymerization]

The catalyst for olefin polymerization according to the present invention contains:
the solid titanium catalyst component (I) according to the present invention; and
an organometallic compound catalyst component (II) containing a metal element selected from Groups 1, 2, and 13 of the periodic table.

### <Organometallic compound catalyst component (II)>

A compound containing a Group 13 metal such as an organoaluminum compound, an alkyl complex compound of a Group 1 metal and aluminum, or an organometallic compound of a Group 2 metal can be used as the organometallic compound catalyst component (II). Among these, an organoaluminum compound is preferable. Specific preferable examples of the organometallic compound catalyst component (II) may include organometallic compound catalyst components described in known documents such as the aforementioned EP585869A1.

### <Electron donor (III)>

The catalyst for olefin polymerization of the present invention may contain, together with the organometallic compound catalyst component (II), an electron donor (III) as necessary. The electron donor (III) is preferably an organosilicon compound. Examples of the organosilicon compound include compounds represented by the following general formula (4):

R^{S}ₙSi(OR")₄₋ₙ ... (4)

wherein R^{S} and R" are hydrocarbon groups; and n is an integer of 0 < n < 4.

Specifically, as for the organosilicon compound represented by the general formula (4), for example, diisopropyldimethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane, vinyltrimethoxysilane, vinyltriethoxysilane, t-butyltriethoxysilane, phenyltriethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, and cyclopentyldimethylethoxysilane are used.

Among these, vinyltriethoxysilane, diphenyldimethoxysilane, dicyclohexyldimethoxysilane, cyclohexylmethyldimethoxysilane, and dicyclopentyldimethoxysilane are preferably used.

Also, silane compounds represented by the following formula (5) as described in WO2004/016662 are preferable examples of the organosilicon compound:

Si (OR^{a})₃(NR^{b}R^{c}) ... (5)

wherein R^{a} is a hydrocarbon group having 1 to 6 carbon atoms, examples of R^{a} include unsaturated or saturated aliphatic hydrocarbon groups having 1 to 6 carbon atoms, and particularly preferable examples include hydrocarbon groups having 2 to 6 carbon atoms. Specific examples thereof include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, and a cyclohexyl group, and among these, an ethyl group is particularly preferable.

In the formula (5), R^{b} is a hydrocarbon group having 1 to 12 carbon atoms or hydrogen, and examples of R^{b} include unsaturated or saturated aliphatic hydrocarbon groups having 1 to 12 carbon atoms and hydrogen. Specific examples thereof include a hydrogen atom, a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and among these, an ethyl group is particularly preferable.

In the formula (5), R^{c} is a hydrocarbon group having 1 to 12 carbon atoms, and examples of R^{c} include unsaturated or saturated aliphatic hydrocarbon groups having 1 to 12 carbon atoms and hydrogen. Specific examples thereof include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and among these, an ethyl group is particularly preferable.

Specific examples of the compound represented by the formula (5) include dimethylaminotriethoxysilane, diethylaminotriethoxysilane, diethylaminotrimethoxysilane, diethylaminotriethoxysilane, diethylaminotri n-propoxysilane, di-n-propylaminotriethoxysilane, methyl-n-propylaminotriethoxysilane, t-butylaminotriethoxysilane, ethyl-n-propylaminotriethoxysilane, ethyl-iso-propylaminotriethoxysilane, and methylethylaminotriethoxysilane.

Other examples of the organosilicon compound include compounds represented by the following formula (6):

R^{N}NSi(OR^{a}) ₃ ... (6)

wherein R^{N}N is a cyclic amino group, and examples of the cyclic amino group include a perhydroquinolino group, a perhydroisoquinolino group, a 1,2,3,4-tetrahydroquinolino group, a 1,2,3,4-tetrahydroisoquinolino group, and an octamethyleneimino group.

Specific examples of the compounds represented by the formula (6) include (perhydroquinolino)triethoxysilane, (perhydroisoquinolino)triethoxysilane, (1,2,3,4-tetrahydroquinolino)triethoxysilane, (1,2,3,4-tetrahydroisoquinolino)triethoxysilane, and octamethyleneiminotriethoxysilane.

Two or more of these organosilicon compounds can be used in combination.

Preferable examples of other useful compounds as the electron donor (III) include polyether compounds described as examples of the aromatic carboxylic acid ester and/or the compound having two or more ether bonds via multiple carbon atoms (the catalyst component (c)).

Among those polyether compounds, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl)-1,3-dimethoxypropane are particularly preferable.

One of these compounds can be used singly, and two or more can be used in combination.

The concomitant use of the electron donor (III) often enables stereoregularity and molecular weight to be regulated. Specifically, when the proportion of the electron donor (III) used with respect to the organometallic compound catalyst component is increased, there is a tendency that a highly stereoregular polymer is likely obtained, and a polymer having a high molecular weight is likely obtained. On the other hand, when the proportion of the electron donor (III) used is decreased, there is a tendency that a polymer having a relatively low stereoregularity (for example, the decane-soluble part content, which will be described later, is relatively high) is likely obtained, and a polymer having a low molecular weight is likely obtained.

The catalyst for olefin polymerization of the present invention may contain, other than the components described above, other components useful for olefin polymerization as necessary. Examples of other components include carriers such as silica, antistatic agents, particle aggregating agents, and storage stabilizers.

### [Method for polymerizing olefin]

The olefin polymerization method according to the present invention involves performing olefin polymerization using the catalyst for olefin polymerization of the present invention. Herein, "polymerization" may include the meaning of homopolymerization, as well as copolymerization such as random copolymerization and block copolymerization.

In the olefin polymerization method of the present invention, polymerization can also be performed in the presence of a prepolymerization catalyst obtained by prepolymerizing an α-olefin in the presence of the catalyst for olefin polymerization of the present invention. This prepolymerization is performed by prepolymerizing an α-olefin in an amount of 0.1 to 1000 g, preferably 0.3 to 500 g, and particularly preferably 1 to 200 g per gram of the catalyst for olefin polymerization.

In prepolymerization, the catalyst can be used in a concentration higher than the catalyst concentration in the system of polymerization.

The concentration of the solid titanium catalyst component (I) in prepolymerization, in terms of titanium atom, is desirably in the range of usually about 0.001 to 200 mmol, preferably about 0.01 to 50 mmol, and particularly preferably 0.1 to 20 mmol per liter of a liquid medium.

It is sufficient that the amount of the organometallic compound catalyst component (II) in prepolymerization is an amount such that 0.1 to 1000 g and preferably 0.3 to 500 g of a polymer is produced per gram of the solid titanium catalyst component (I), and it is desirable that the amount is usually about 0.1 to 300 mol, preferably about 0.5 to 100 mol, and particularly preferably 1 to 50 mol per mole of titanium atoms in the solid titanium catalyst component (I).

In prepolymerization, for example, the electron donor (III) can also be used as necessary, and at this time, such components are used in an amount of 0.1 to 50 mol, preferably 0.5 to 30 mol, and even more preferably 1 to 10 mol per mole of titanium atoms in the solid titanium catalyst component (I). By regulating the amount of the electron donor (III), the stereoregularity of the resulting olefin polymer may be regulated.

Prepolymerization can be performed under mild conditions after adding an olefin and the above catalyst components to an inert hydrocarbon medium.

In this case, specific examples of the inert hydrocarbon medium used may include:
aliphatic hydrocarbons such as propane, butane, pentane, hexane, heptane, octane, decane, dodecane, and kerosene;
alicyclic hydrocarbons such as cycloheptane, methylcycloheptane, 4-cycloheptane, and methyl-4-cycloheptane;
aromatic hydrocarbons such as benzene, toluene, and xylene;
halogenated hydrocarbons such as ethylenechloride and chlorobenzene; and mixtures thereof.

Among these inert hydrocarbon media, aliphatic hydrocarbons are preferably used in particular. In the case of using an inert hydrocarbon medium, prepolymerization is preferably performed in a batch-wise manner.

On the other hand, prepolymerization can also be performed using the olefin itself as a solvent, and prepolymerization can also be performed in a substantially solvent-free state. In this case, prepolymerization is preferably performed in a continuous manner.

The olefin used in prepolymerization may be the same as or different from the olefin used in polymerization that will be described later, and specifically, propylene is preferable.

Desirably, the temperature during prepolymerization is in a range of usually about -20 to +100°C, preferably about - 20 to +80°C, and even more preferably 0 to +40°C.

Next, polymerization will now be described that is performed by way of the above-described prepolymerization or without prepolymerization.

Examples of olefins that are usable (i.e., to be polymerized) in polymerization may include α-olefins having 3 to 20 carbon atoms, e.g., linear olefins such as propylene, 1-butene, 1-pentene, 1-hexene, 1-octene, 1-decene, 1-dodecene, 1-tetradecene, 1-hexadecene, 1-octadecene, and 1-eicosene, and branched olefins such as 4-methyl-1-pentene, 3-methyl-1-pentene, and 3-methyl-1-butene, and preferable are propylene, 1-butene, 1-pentene, 4-methyl-1-pentene, and 3-methyl-1-butene. From the viewpoint that advantages of a polymer having a broad molecular weight distribution are likely exhibited in a highly rigid resin, propylene, 1-butene, 4-methyl-1-pentene, and 3-methyl-1-butene are particularly preferable.

In addition to these α-olefins, also usable are ethylene, aromatic vinyl compounds such as styrene and allylbenzene, and alicyclic vinyl compounds such as vinylcyclohexane and vinylcycloheptane. Moreover, cyclopentene, cycloheptene, norbornene, tetracyclododecene, and compounds having multiple unsaturated bonds such as conjugated dienes and non-conjugated dienes, e.g., dienes such as isoprene and butadiene, can also be used as polymerization feedstocks together with ethylene and α-olefin. One of these compounds may be used singly, or two or more thereof may be used in combination (hereinafter, the olefin used with ethylene or the "α-olefin having 3 to 20 carbon atoms" is also referred to as a "further olefin").

Among the further olefins, ethylene and aromatic vinyl compounds are preferable. Out of the total 100 wt% of olefins, a small amount, e.g., 10 wt% or less and preferably 5 wt% or less, of further olefins such as ethylene may be used in combination.

In the present invention, prepolymerization and polymerization can be performed by any of the liquid-phase polymerization methods such as bulk polymerization, solution polymerization, and suspension polymerization, and the gas-phase polymerization methods.

When polymerization takes the reaction form of slurry polymerization, an inert hydrocarbon as used during the above-described prepolymerization can be used as a reaction solvent, and an olefin that is liquid at the reaction temperature can also be used.

In polymerization in the polymerization method of the present invention, the solid titanium catalyst component (I) is used in an amount, in terms of titanium atom, of usually about 0.0001 to 0.5 mmol and preferably about 0.005 to 0.1 mmol per liter of the polymerization volume. The organometallic compound catalyst component (II) is used in an amount of usually about 1 to 2000 mol, preferably about 5 to 500 mol, more preferably 10 to 350 mol, even more preferably 30 to 350 mol, and particularly preferably 50 to 350 mol per mole of titanium atoms in the prepolymerization catalyst components in the polymerization system. The electron donor (III), if used, is used in an amount of 0.001 to 50 mol, preferably 0.01 to 30 mol, and particularly preferably 0.05 to 20 mol per mole of metal atoms of the organometallic compound catalyst component (II). As described above, the stereoregularity and molecular weight may be regulated by way of the amount of the electron donor (III) used.

Performing polymerization in the presence of hydrogen makes it possible to regulate the molecular weight of the resulting polymer, and provides a polymer having a high melt flow rate.

In polymerization in the present invention, the olefin polymerization temperature is usually about 20 to 200°C, preferably about 30 to 100°C, and more preferably 50 to 90°C. The pressure is usually set to normal pressure to 10 MPa, and preferably 0.20 to 5 MPa). In the polymerization method of the present invention, polymerization can be performed in any of the batch-wise, semi-continuous, and continuous manners. Moreover, polymerization can be performed at two or more divided stages by changing the reaction conditions. Performing such multi-stage polymerization enables the molecular weight distribution of the olefin polymer to be further broadened.

The olefin polymer thus obtained may be any of, for example, a homopolymer, a random copolymer, and a block copolymer.

When olefin polymerization, or propylene polymerization in particular, is performed using the catalyst for olefin polymerization described above, a highly stereoregular propylene-based polymer having a decane-insoluble part content of 70% or more, preferably 85% or more, and particularly preferably 90% or more can be obtained.

Moreover, according to the olefin polymerization method of the present invention, polyolefin or, in particular, polypropylene having a broad molecular weight distribution can be obtained even without performing multi-stage polymerization, or even through polymerization having a small number of stages such as single-stage polymerization. It is a feature of the olefin polymerization method of the present invention that, in particular, an olefin polymer is often obtained that has a higher proportion of high molecular weight components and a lower proportion of low molecular weight components (which are especially referred to as sticky compounds) than conventional olefin polymers having a comparable melt flow rate (MFR). This feature can be verified by gel permeation chromatography (GPC) measurement that will be described later, and a polymer having both a high Mw/Mn value and a high Mz/Mw value can be obtained.

Polypropylene obtained using conventional solid titanium catalyst components including magnesium, titanium, halogen, and an electron donor generally has an Mw/Mn value of 5 or less and an Mz/Mw value of less than 4, which are indices of a molecular weight distribution as determined by GPC measurement, in an MFR range of 1 to 10 g/10 min, but when the olefin polymerization method of the present invention is used, an olefin polymer having an Mw/Mn value of 6 to 30 and preferably 7 to 20 can be obtained under the same polymerization conditions. Moreover, an olefin polymer having an Mz/Mw value of preferably 4 to 15 and more preferably 4.5 to 10 can be obtained. In particular, according to the method for polymerizing an olefin of the present invention, a polymer having a high Mz/Mw value is often obtained.

It is common knowledge among those skilled in the art that polypropylene having a high Mw/Mn value has excellent moldability and rigidity. On the other hand, a high Mz/Mw value indicates a high content ratio of high molecular weight component, and it is expected that the resulting polypropylene possibly has high melt tension and excellent moldability.

The use of the method for polymerizing an olefin of the present invention enables a polymer having a broad molecular weight distribution to be obtained without performing multi-stage polymerization and thus, possibly, a polymer production apparatus to be more simplified. Also, application to a conventional multi-stage polymerization method is expected to enable a polymer having better melt tension and moldability to be obtained.

While there are other methods for obtaining a polymer having a broad molecular weight distribution such as a method involving melt-mixing or melt-kneading polymers having different molecular weights, polymers obtained by such methods in some cases do not have sufficiently increased melt tension or moldability despite the relatively complex procedure. This is presumably because polymers having different molecular weights, basically, are unlikely to mix. On the other hand, the polymer obtained by the method for polymerizing an olefin of the present invention, because polymers having different molecular weights of extremely broad ranges are mixed at the catalyst level, i.e., the nano-level, is expected to have a high melt tension and excellent moldability.

The polymer obtained by the method for polymerizing an olefin of the present invention has high stereoregularity as described above. Accordingly, the olefin polymer obtained by the method of the present invention tends to have a high melting point. The melting point is usually determined by differential scanning calorimetry (DSC).

Propylene-based polymers as obtained by the method for polymerizing an olefin of the present invention (for example, the content of propylene-derived structural units is 99 mol% or more) have a high content of decane-soluble parts, but surprisingly, as described above, they show an unexpected tendency to have a high amount of heat of fusion.

Usually, it is known that decane-soluble parts in propylene homopolymers tend to have not only low stereoregularity but also a low molecular weight. In addition, it is also known that polymers with low stereoregularity, such as the decane-soluble parts described above, are sometimes used as elastomers for materials of shoe soles and the like.

The present inventors have found that, in a propylene polymer as obtained by the method for polymerizing an olefin of the present invention, the molecular weight of decane-soluble parts tends to be high. Accordingly, there is a possibility that a propylene-based polymer as described above (propylene-derived structural units are 99 mol% or more, the decane-soluble part content is high, and the molecular weight of decane-soluble parts is high.) is a novel polymer.

The content of propylene-derived structural units in the propylene-based polymer is preferably 99.3 mol% or more, more preferably 99.5 mol% or more, even more preferably 99.7 mol% or more, and especially 99.8 mol% or more. The upper limit value is, of course, 100 mol%.

The decane-soluble part content in the propylene-based polymer is preferably 3 mass% or more, more preferably 4 mass% or more, and even more preferably 5 mass% or more. On the other hand, the upper limit value is preferably 15 mass%, more preferably 14 mass%, and even more preferably 13 mass%.

The molecular weight of decane-soluble parts in the propylene-based polymer is 20% or more, more preferably 25% or more, and even more preferably 27% or more of the entire propylene-based polymer as weight average molecular weight.

The decane-soluble parts described above are specific components whose methyl group-derived stereoregularity (pentad tacticity), as measured by ¹³C NMR, shows almost similar numerical values for mmmm and rrrr values. The mmmm and rrrr values described above are both preferably 10 to 30%. The lower limit value is more preferably 13%, and even more preferably 15%. On the other hand, the upper limit value is more preferably 27%, and even more preferably 25%.

The propylene-based polymer containing such decane-soluble parts with a high molecular weight can be expected to have not only a high amount of heat of fusion but also flexibility as well, even though its structure is composed almost entirely of propylene-derived structural units.

The propylene polymer as described above can be obtained by, for example, polymerizing propylene using the olefin polymerization catalyst of the present invention. Although the reason why such a propylene polymer can be obtained is not known at present, it is thought to be because the catalyst for active species that can have various conformations, such as the olefin polymer described above, can also form active species that are difficult to undergo chain transfer and have low stereospecificity.

As described above, the olefin polymer, or the propylene polymer in particular, obtained by the method of the present invention tends to have a broad molecular weight distribution and in particular a large Mz, and thus tends to have a distribution that spreads toward the high molecular weight side. Since the molecular mobility of an olefin polymer varies according to the molecular weight, a chart obtained by DSC measurement in the case of a polymer having a broad molecular weight distribution may have not a unimodal shape but a multimodal shape or a broad shape. That is to say, since an ultra-high molecular weight component is more unlikely to crystallize, it is conceived that a chart that has a broad shape on the low temperature side in a DSC measurement method is possibly due to an ultra-high molecular weight component. Accordingly, ΔH that is measured as heat of fusion (amount of heat of crystallization) may also tend to be low.

It is said that the components in the ultra-high molecular weight region may cause problems, such as fish eyes, in applications where transparency and see-through properties are emphasized, such as film applications. The olefin polymer obtained by the method of the present invention tends to be capable of achieving a finely dispersed state that can also be referred to as a catalytically active species level, i.e., nano-level, as described above, and thus tends to be unlikely to cause such problems. Also, selecting the structure of the amide compound used in the catalyst of the present invention enables the balance between the molecular weight and content of components in the ultra-high molecular weight region and the molecular weight and melt flow rate (MFR) of the entirety of the polymer to be regulated as well.

The propylene polymer obtained by the method of the present invention can be used in known various applications. In particular, since the propylene polymer is expected to have high heat resistance and rigidity, the propylene polymer is suitable for, for example, various injection-molded article applications and, more specifically, automobile components and household electric appliance components. Also, the propylene polymer can be used in various sheets and films due to the broad molecular weight distribution. In particular, the propylene polymer is suitable for, for example, separator applications in lithium ion batteries and capacitors as well. Also, the propylene polymer can be suitably used in, for example, stamping-molded articles, calender-molded articles, and rotational-molded articles.

### Examples

The present invention will now be described by way of Examples below, but the present invention is not limited to the Examples.

In the following Examples, the bulk specific gravity, the melt flow rate, the amount of decane-soluble (insoluble) component, the molecular weight distribution, the final melting point, the melting point, the crystallization temperature, and the amount of heat of fusion of propylene polymers were measured by the following methods.

### (1) Bulk specific gravity:

The bulk specific gravity was measured in accordance with JIS K-6721.

### (2) Melt flow rate (MFR):

In accordance with ASTM D1238E, the load was set at 2.16 kg and the measurement temperature for a propylene polymer was set at 230°C.

### (3) Amount of decane-soluble (insoluble) component:

About 3 g of a propylene polymer (it was measured to a unit of 10⁻⁴ g, and this weight was denoted as b (g) in the following equation), 500 ml of decane, and a small amount of a heat-resistant stabilizer soluble in decane were added in a glass measurement vessel, and the propylene polymer was dissolved by being heated to 150°C over 2 hours while being stirred with a stirrer in a nitrogen atmosphere, then maintained at 150°C for 2 hours, and gradually cooled to 23°C over 8 hours. The resulting liquid containing precipitates of the propylene polymer was subjected to filtration under reduced pressure through a 25G-4 standard glass filter manufactured by Tokyo Garasu Kikai Co., Ltd. Then, 100 ml of the filtrate was harvested and dried under reduced pressure to give a portion of decane-soluble parts, and the weight thereof was weighed to a unit of 10⁻⁴ g (this weight was denoted as a (g) in the following equation). After this operation, the amount of the decane-soluble parts was determined by the following equation. 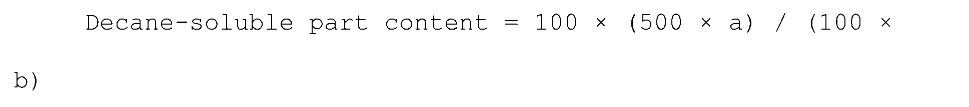 Decane-soluble part content = 100 × (500 × a) / (100 × b) 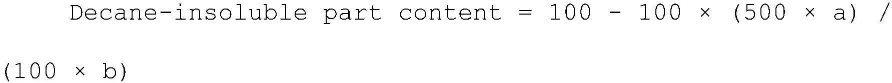 Decane-insoluble part content = 100 - 100 × (500 × a) / (100 × b)

### <Method for recovering decane-soluble part: Example 7 and Comparative Example 2>

To the filtrate described above, 5-time volume of acetone (poor solvent) was added at room temperature to precipitate the dissolved polymer, which was then filtered through a 350 mesh metal filter to obtain precipitates. Next, the recovered precipitates were dried under reduced pressure under the condition of 80°C for 1 hour to obtain decane-soluble parts of the propylene polymer.

The molecular weight of these decane-soluble parts was measured by the GPC method described later, and stereoregularity was measured by the ¹³C NMR method.

### (4) Molecular weight distribution (MWD):

Gel permeation chromatograph: HLC-8321 GPC/HT model manufactured by Tosoh Corporation
Detector: Differential refractometer
Column: TSKgel GMH6-HT × 2 and TSKgel GMH6-HTL × 2 manufactured by Tosoh Corporation were serially connected.
Mobile phase medium: o-Dichlorobenzene
Flow rate: 1.0 ml/min
Measurement temperature: 140°C
Method of creating calibration curve: Standard polystyrene sample was used.
Sample concentration: 0.1% (w/w)
Amount of sample solution: 0.4 ml Measurement was performed under the above conditions, and the resulting chromatogram was analyzed by a known method to calculate the weight average molecular weight (Mw), the number average molecular weight (Mn), the Z average molecular weight (Mz), and the Mw/Mn value and the Mz/Mw value that are indices of the molecular weight distribution (MWD). The measurement time per sample was 60 min.

### (5) Melting point (Tm) of polymer:

The melting point (Tm), the crystallization temperature (Tc), and the amount of heat of fusion (ΔH) of polymers in the present invention were measured with a differential scanning calorimeter (DSC) in a DSC8000 apparatus manufactured by PerkinElmer Co., Ltd. First, 3 to 10 mg of a sample was sealed into an aluminum pan and heated from room temperature to 200°C at 100°C/min. The sample was retained at 200°C for 5 min, and then cooled to 30°C at 10°C/min. The peak temperature observed in this cooling test was regarded as the crystallization temperature (Tc), and the amount of produced heat specified by the area of the peak was regarded as ΔH. Subsequently, the sample was left to stand for 5 min at 30°C, and then heated for the second time to 200°C at 10°C/min. The peak temperature observed in this second heating test was regarded as the melting point (Tm).

The final melting point (Tmf) of a polymer in the present invention was measured with a differential scanning calorimeter (DSC) in a DSC 8000 apparatus manufactured by PerkinElmer Co., Ltd. First, 3 to 10 mg of a sample was sealed into an aluminum pan, and heated from room temperature to 240°C at 80°C/min. The sample was retained at 240°C for 1 minute and then cooled to 0°C at 80°C/min. After being retained at 0°C for 1 minute, the sample was heated to 150°C at 80°C/min and retained for 5 min. Finally, the sample was heated to 180°C at 1.35°C/min, and the intersection between the baseline and the tangent of the inflection point on the high temperature side of the peak obtained in this final heating test was regarded as the final melting point (Tmf).

Tmf can be considered as one parameter for evaluating the crystal structure of a component exhibiting extremely high stereoregularity, and the ease of crystallization and the crystal structure, for example, of a polymer in the ultra-high molecular weight region, which is regarded as having a tendency of being unlikely to crystallize. More specifically, it can be considered that, as this Tmf value is higher, the ultra-high molecular weight polymer component is more likely to form crystals that has high heat resistance.

### (6) Stereoregularity of propylene polymer (¹³C NMR measurement):

The measurement was performed by dissolving 50 mg of a sample in 0.6 ml of a 4/1 mixed solvent of o-dichlorobenzene and deuterated benzene (o-dichlorobenzene/deuterated benzene; volume ratio), and using a nuclear magnetic resonance apparatus AVANCE NEO cryo-500 model manufactured by Bruker Biospin K.K., at 120°C, with a 45° pulse, repeating time of 5.5 seconds, and integrated frequency of 256 times. The reference value of chemical shift was set at 21.59 ppm for the mmmm-derived signal of methyl groups.

The peak of the methyl group derived from propylene was assigned using a conventional method to determine the proportion of various stereostructures.

Some structural formulae of compounds used in the following Examples and Comparative Examples have stereoisomeric structures. The structural formulae showing stereoisomers of the exemplified compounds show the major isomers of the compounds used in the Examples and Comparative Examples. In the present invention, the main component refers to a component accounting for more than 50 mol%, and preferably 70 mol% or more.

### [Example 1]

### <Preparation of solid titanium catalyst component [α1] >

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 38.3 ml of the homogeneous solution was added dropwise to 100 ml of titanium tetrachloride retained at -20°C over 45 min while being stirred. After completion of adding, the temperature of the mixed liquid was raised to 80°C over 3.8 hours, and when the temperature reached 80°C, 1.77 g of the following compound 1 was added to the mixed liquid. The temperature was again raised to 120°C over 40 min, and the mixture was retained at the same temperature for 35 min while being stirred. After the reaction was complete, the solid portion was recovered by hot filtration, resuspended in 100 ml of titanium tetrachloride, and again thermally reacted at 120°C for 35 min while being stirred. After the reaction was complete, the solid portion was recovered again by hot filtration and thoroughly washed with decane at 100°C and decane at room temperature until no free titanium compound was detected in the washing liquid. The solid titanium catalyst component [α1] prepared by the above operations was preserved as a decane slurry, and a part of the slurry was dried to check the catalyst composition. The composition of the solid titanium catalyst component [α1] thus obtained had 0.42 mass% titanium, 1.2 mass% magnesium, and 0.07 mass% 2-ethylhexyl alcohol residues.

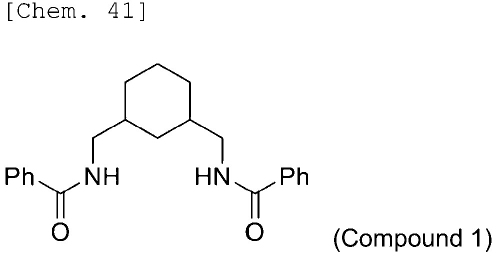

### <Polymerization>

After 500 g of propylene and 1 NL of hydrogen at room temperature were added to a polymerization apparatus having an inner volume of 2 liters, a mixed liquid formed by mixing 7 ml of heptane, 0.50 mmol of triethyl aluminum, 0.10 mmol of cyclohexylmethyldimethoxysilane, and 0.0040 mmol (in terms of titanium atom) of the solid titanium catalyst component [α1] at 25°C for 10 min was added, and the temperature inside the polymerization apparatus was promptly raised to 70°C while stirring. After polymerization at 70°C for 1.5 hours, the reaction was terminated by a small amount of methanol, and propylene was purged. Moreover, the resulting polymer particles were dried under reduced pressure at 80°C overnight. Table 1 shows the activity, bulk specific gravity, MFR, amount of decane-insoluble parts, Tm, Tmf, and MWD.

### [Example 2]

### <Preparation of solid titanium catalyst component [α2]>

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 30.6 ml of the homogeneous solution was added dropwise to 80 ml of titanium tetrachloride retained at -20°C over 45 min while being stirred. After completion of adding, the temperature of the mixed liquid was raised to 80°C over 3.8 hours, and when the temperature reached 80°C, 0.63 g of the following compound 2 was added to the mixed liquid. The temperature was again raised to 120°C over 40 min, and the mixture was retained at the same temperature for 35 min while being stirred. After the reaction was complete, the solid portion was recovered by hot filtration, resuspended in 80 ml of titanium tetrachloride, and again thermally reacted at 120°C for 35 min while being stirred. After the reaction was complete, the solid portion was recovered again by hot filtration and thoroughly washed with decane at 100°C and decane at room temperature until no free titanium compound was detected in the washing liquid. The solid titanium catalyst component [α2] prepared by the above operations was preserved as a decane slurry, and a part of the slurry was dried to check the catalyst composition. The composition of the solid titanium catalyst component [α2] thus obtained had 0.36 mass% titanium, 1.7 mass% magnesium, and 0.11 mass% 2-ethylhexyl alcohol residues.

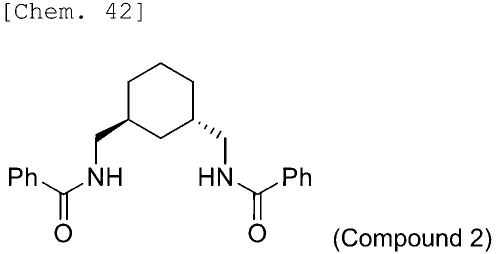

### <Polymerization>

After 500 g of propylene and 1 NL of hydrogen at room temperature were added to a polymerization apparatus having an inner volume of 2 liters, a mixed liquid formed by mixing 7 ml of heptane, 0.40 mmol of triethyl aluminum, 0.08 mmol of cyclohexylmethyldimethoxysilane, and 0.0032 mmol (in terms of titanium atom) of the solid titanium catalyst component [α2] at 25°C for 10 min was added, and the temperature inside the polymerization apparatus was promptly raised to 70°C while stirring. After polymerization at 70°C for 1.5 hours, the reaction was terminated by a small amount of methanol, and propylene was purged. Moreover, the resulting polymer particles were dried under reduced pressure at 80°C overnight. Table 1 shows the activity, bulk specific gravity, MFR, amount of decane-insoluble parts, Tm, Tmf, and MWD.

### [Example 3]

### <Preparation of solid titanium catalyst component [α3]>

A solid titanium catalyst component [α3] was obtained in the same manner as Example 1, except that 1.64 g of the following compound 3 was used in place of 1.77 g of the compound 1. The composition of the solid titanium catalyst component [α3] thus obtained had 0.44 mass% titanium, 1.4 mass% magnesium, and 0.02 mass% 2-ethylhexyl alcohol residues.

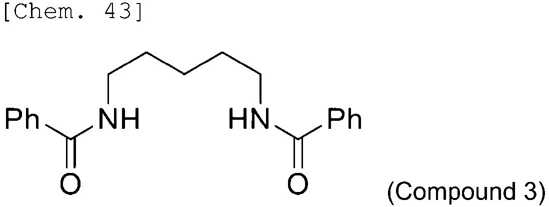

### <Polymerization>

Polymerization of propylene was performed in the same manner as Example 1, except that the solid titanium catalyst component [α3] was used in place of the solid titanium catalyst component [α1]. The results are shown in Table 1.

### [Example 4]

### <Preparation of solid titanium catalyst component [α4]>

A solid titanium catalyst component [α4] was obtained in the same manner as Example 1, except that 1.74 g of the following compound 4 was used in place of 1.77 g of the compound 1. The composition of the solid titanium catalyst component [α4] thus obtained had 0.33 mass% titanium, 1.5 mass% magnesium, and 0.02 mass% 2-ethylhexyl alcohol residues.

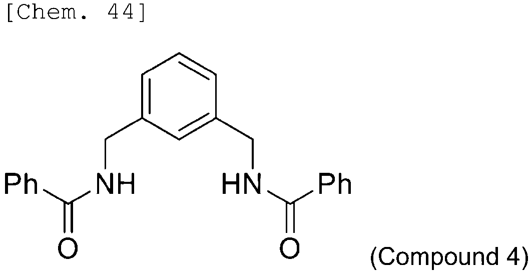

### <Polymerization>

Polymerization of propylene was performed in the same manner as Example 1, except that the solid titanium catalyst component [α4] was used in place of the solid titanium catalyst component [α1]. The results are shown in Table 1.

### [Example 5]

### <Preparation of solid titanium catalyst component [α5]>

A solid titanium catalyst component [α5] was obtained in the same manner as Example 1, except that 1.47 g of the following compound 5 was used in place of 1.77 g of the compound 1. The composition of the solid titanium catalyst component [α5] thus obtained had 0.28 mass% titanium, 1.7 mass% magnesium, and 0.06 mass% 2-ethylhexyl alcohol residues.

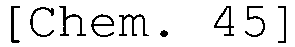

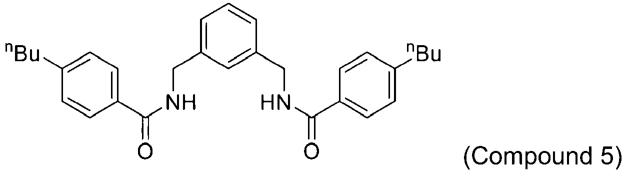

### <Polymerization>

Polymerization of propylene was performed in the same manner as Example 1, except that 0.0032 mmol (in terms of titanium atom) of the solid titanium catalyst component [α5] was used in place of the solid titanium catalyst component [α1], the amount of triethylaluminum used was changed from 0.50 mmol to 0.40 mmol, and the amount of cyclohexylmethyldimethoxysilane used was changed from 0.10 mmol to 0.08 mmol. The results are shown in Table 1.

### [Example 6]

### <Preparation of solid titanium catalyst component [α6]>

A solid titanium catalyst component [α6] was obtained in the same manner as Example 1, except that 1.88 g of the following compound 6 was used in place of 1.77 g of the compound 1. The composition of the solid titanium catalyst component [α6] thus obtained had 0.43 mass% titanium, 1.6 mass% magnesium, and 0.04 mass% 2-ethylhexyl alcohol residues.

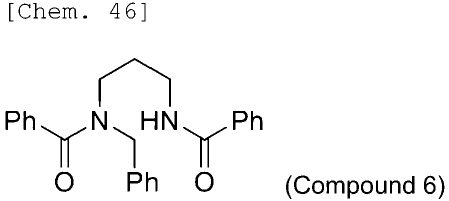

### <Polymerization>

Polymerization of propylene was performed in the same manner as Example 1, except that the solid titanium catalyst component [α6] was used in place of the solid titanium catalyst component [α1]. The results are shown in Table 1.

### [Example 7]

### <Preparation of solid titanium catalyst component [α7]>

A solid titanium catalyst component [α7] was obtained in the same manner as Example 1, except that 1.71 g of the following compound 7 was used in place of 1.77 g of the compound 1. The composition of the solid titanium catalyst component [α7] thus obtained had 0.66 mass% titanium, 1.3 mass% magnesium, and 0.05 mass% 2-ethylhexyl alcohol residues.

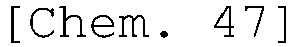

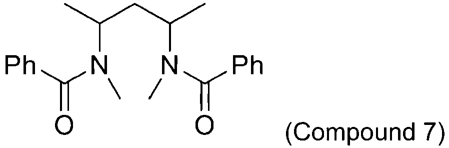

### <Polymerization>

Polymerization of propylene was performed in the same manner as Example 1, except that the solid titanium catalyst component [α7] was used in place of the solid titanium catalyst component [α1]. The results are shown in Table 1. Separately, decane-soluble parts were recovered and subjected to GPC measurement and ¹³C NMR measurement. The results are shown in Table 2.

### [Example 8]

### <Preparation of solid titanium catalyst component [α8]>

A solid titanium catalyst component [α8] was obtained in the same manner as Example 1, except that 1.37 g of the following compound 8 was used in place of 1.77 g of the compound 1. The composition of the solid titanium catalyst component [α8] thus obtained had 0.64 mass% titanium, 1.4 mass% magnesium, and 0.07 mass% 2-ethylhexyl alcohol residues.

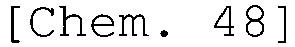

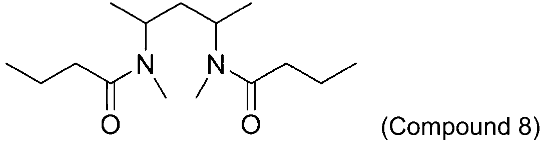

### <Polymerization>

Polymerization of propylene was performed in the same manner as Example 1, except that the solid titanium catalyst component [α8] was used in place of the solid titanium catalyst component [α1]. The results are shown in Table 1.

### [Comparative Example 1]

### <Preparation of solid titanium catalyst component [β1]>

A solid titanium catalyst component [β1] was obtained in the same manner as Example 1, except that 1.12 g of the following compound-c1 was used in place of 1.77 g of the compound 1. The composition of the solid titanium catalyst component [β1] thus obtained had 0.57 mass% titanium, 1.5 mass% magnesium, and 0.03 mass% 2-ethylhexyl alcohol residues.

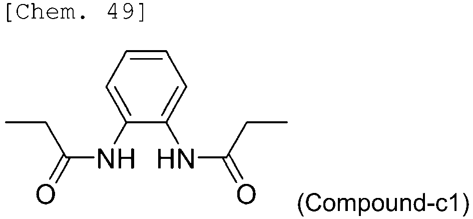

### <Polymerization>

Polymerization of propylene was performed in the same manner as Example 1, except that the solid titanium catalyst component [β1] was used in place of the solid titanium catalyst component [α1]. The results are shown in Table 1.

### [Comparative Example 2]

### <Preparation of solid titanium catalyst component [β2]>

A solid titanium catalyst component [β2] was obtained in the same manner as Example 1, except that 1.60 g of the following compound-c2 was used in place of 1.77 g of the compound 1. The composition of the solid titanium catalyst component [β2] thus obtained had 0.25 mass% titanium, 1.9 mass% magnesium, and 0.08 mass% 2-ethylhexyl alcohol residues.

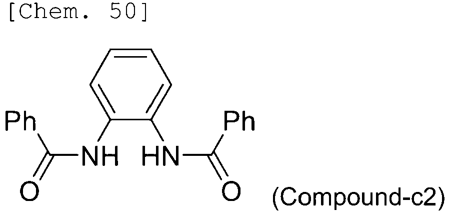

### <Polymerization>

Polymerization of propylene was performed in the same manner as Example 1, except that the solid titanium catalyst component [β2] was used in place of the solid titanium catalyst component [α1]. The results are shown in Table 1. Separately, decane-soluble parts were recovered, and subjected to GPC measurement and ¹³C NMR measurement. The results are shown in Table 2.

### [Comparative Example 3]

### <Preparation of solid titanium catalyst component [β3]>

A solid titanium catalyst component [β3] was obtained in the same manner as Example 1, except that 1.85 g of the following compound-c3 was used in place of 1.77 g of the compound 1. The composition of the solid titanium catalyst component [β3] thus obtained had 0.77 mass% titanium, 1.1 mass% magnesium, and 0.18 mass% 2-ethylhexyl alcohol residues.

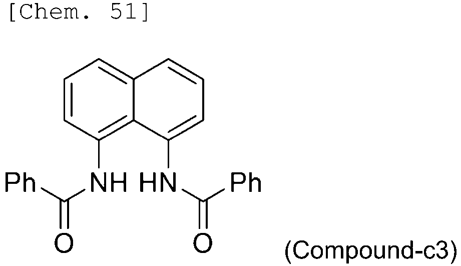

### <Polymerization>

Polymerization of propylene was performed in the same manner as Example 1, except that the solid titanium catalyst component [β3] was used in place of the solid titanium catalyst component [α1]. The results are shown in Table 1.

### [Table 1]

**Table 1**

| Example | Activity (kg-PP/g-cat.) | Bulk specific gravity (g/mL) | MFR (g/10 min) | Amount of decane-insoluble parts (wt%) | Mw | Mw/Mn | Mz/Mw |
|---|---|---|---|---|---|---|---|
| Example 1 | 16.0 | 0.46 | 5.9 | 5.8 | 431,000 | 10.8 | 7.7 |
| Example 2 | 28.8 | 0.48 | 0.7 | 3.8 | 797,000 | 13.5 | 6.0 |
| Example 3 | 14.0 | 0.47 | 7.8 | 7.8 | 378,000 | 10.5 | 8.1 |
| Example 4 | 13.6 | 0.47 | 10.8 | 7.1 | 364,000 | 10.2 | 9.4 |
| Example 5 | 17.0 | 0.48 | 8.7 | 6.7 | 361,000 | 8.7 | 8.5 |
| Example 6 | 14.5 | 0.47 | 17.3 | 8.3 | 280,000 | 8.6 | 8.1 |
| Example 7 | 13.4 | 0.38 | 10.1 | 9.0 | 345,000 | 9.1 | 8.8 |
| Example 8 | 14.6 | 0.47 | 13.0 | 8.0 | 309,000 | 8.8 | 8.3 |
| Comparative Example 1 | 5.8 | 0.42 | 32.0 | 10.6 | 211,000 | 9.3 | 5.4 |
| Comparative Example 2 | 11.2 | 0.45 | 23.6 | 9.1 | 222,000 | 9.3 | 5.6 |
| Comparative Example 3 | 21.6 | 0.47 | 9.7 | 6.6 | 289,000 | 9.1 | 4.7 |

**Table 1 (continued)**

| Example | Mw/Mn + Mz/Mw | Tmf (°C) | Tm (°C) | Tc (°C) | ΔH (J/g) |
|---|---|---|---|---|---|
| Example 1 | 18.5 | 169.8 | 159.9 | 116.4 | 98.4 |
| Example 2 | 19.5 | 171.0 | 161.8 | 117.2 | 97.3 |
| Example 3 | 18.6 | 169.4 | 158.9 | 115.1 | 90.6 |
| Example 4 | 19.6 | 169.7 | 159.3 | 116.5 | 95.3 |
| Example 5 | 17.2 | 169.4 | 159.0 | 114.4 | 97.2 |
| Example 6 | 16.7 | 169.4 | 158.2 | 115.7 | 91.6 |
| Example 7 | 17.9 | 169.0 | 163.0, 157.6 | 112.6 | 89.7 |
| Example 8 | 17.1 | 169.2 | 158.7 | 114.4 | 90.3 |
| Comparative Example 1 | 14.7 | 169.2 | 164.0, 157.1 | 111.3 | 73.8 |
| Comparative Example 2 | 14.9 | 169.3 | 164.6, 157.8 | 110.9 | 78.8 |
| Comparative Example 3 | 13.7 | 169.5 | 164.8, 158.8 | 110.2 | 80.2 |

### [Table 2]

**Table 2**

| | Decane-soluble parts / wt% (acetone precipitation recovery) | GPC measurement results | | | ¹³C NMR measurement results | | |
|---|---|---|---|---|---|---|---|
| | | Mw | Mw/Mn | Mz/Mw | mmmm | mmrr | rrrr |
| Example 7 | 7.7 | 101000 | 4.9 | 3.9 | 19.2 | 15.6 | 16.3 |
| Comparative Example 2 | 7.7 | 79200 | 4.4 | 3.8 | 21.5 | 15.1 | 18.2 |

### [Example 9]

### <Preparation of solid titanium catalyst component [α9]>

A solid titanium catalyst component [α9] was obtained in the same manner as Example 1, except that 1.57 g of the following compound 9 was used in place of 1.77 g of the compound 1. The composition of the solid titanium catalyst component [α9] thus obtained had 0.58 mass% titanium, 1.3 mass% magnesium, and 0.04 mass% 2-ethylhexyl alcohol residues.

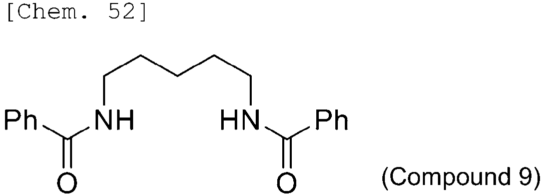

### <Polymerization>

Polymerization of propylene was performed in the same manner as Example 1, except that the solid titanium catalyst component [α9] was used in place of the solid titanium catalyst component [α1]. The results are shown in Table 3.

### [Example 10]

### <Preparation of solid titanium catalyst component [α10]>

A solid titanium catalyst component [α10] was obtained in the same manner as Example 1, except that 1.28 g of the following compound 10 was used in place of 1.77 g of the compound 1. The composition of the solid titanium catalyst component [α10] thus obtained had 0.61 mass% titanium, 1.4 mass% magnesium, and 0.15 mass% 2-ethylhexyl alcohol residues.

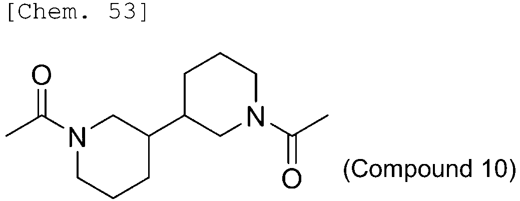

### <Polymerization>

Polymerization of propylene was performed in the same manner as Example 1, except that the solid titanium catalyst component [α10] was used in place of the solid titanium catalyst component [α1]. The results are shown in Table 3.

### [Example 11]

### <Preparation of solid titanium catalyst component [α11]>

A solid titanium catalyst component [α11] was obtained in the same manner as Example 1, except that 1.77 g of the following compound 11 was used in place of 1.77 g of the compound 1. The composition of the solid titanium catalyst component [α11] thus obtained had 0.87 mass% titanium, 1.1 mass% magnesium, and 0.15 mass% 2-ethylhexyl alcohol residues.

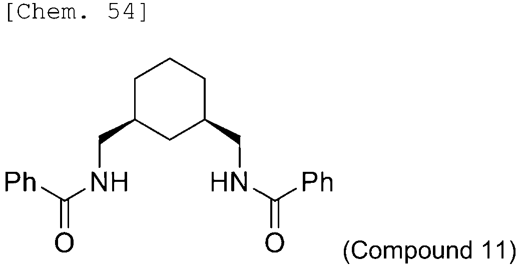

### <Polymerization>

Polymerization of propylene was performed in the same manner as Example 1, except that the solid titanium catalyst component [α11] was used in place of the solid titanium catalyst component [α1]. The results are shown in Table 3.

### [Example 12]

### <Preparation of solid titanium catalyst component [α12]>

A solid titanium catalyst component [α12] was obtained in the same manner as Example 1, except that 1.64 g of the following compound 12 was used in place of 1.77 g of the compound 1. The composition of the solid titanium catalyst component [α12] thus obtained had 0.64 mass% titanium, 1.5 mass% magnesium, and 0.09 mass% 2-ethylhexyl alcohol residues.

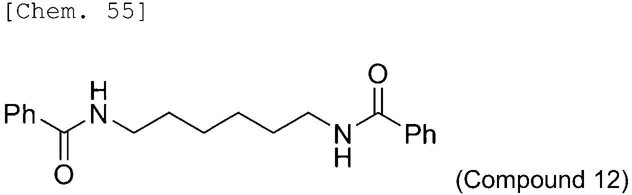

### <Polymerization>

Polymerization of propylene was performed in the same manner as Example 1, except that the solid titanium catalyst component [α12] was used in place of the solid titanium catalyst component [α1]. The results are shown in Table 3.

### [Example 13]

### <Preparation of solid titanium catalyst component [α13]>

A solid titanium catalyst component [α13] was obtained in the same manner as Example 1, except that 1.64 g of the following compound 13 was used in place of 1.77 g of the compound 1. The composition of the solid titanium catalyst component [α13] thus obtained had 0.91 mass% titanium, 1.0 mass% magnesium, and 0.04 mass% 2-ethylhexyl alcohol residues.

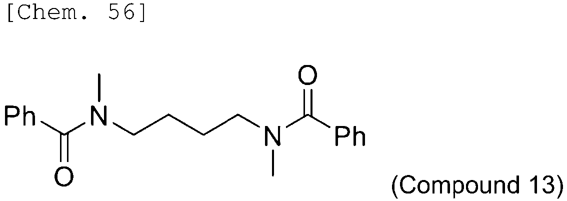

### <Polymerization>

Polymerization of propylene was performed in the same manner as Example 1, except that the solid titanium catalyst component [α13] was used in place of the solid titanium catalyst component [α1]. The results are shown in Table 3.

### [Example 14]

### <Preparation of solid titanium catalyst component [α14]>

A solid titanium catalyst component [α14] was obtained in the same manner as Example 1, except that 1.94 g of the following compound 14 was used in place of 1.77 g of the compound 1. The composition of the solid titanium catalyst component [α14] thus obtained had 0.67 mass% titanium, 1.2 mass% magnesium, and 0.04 mass% 2-ethylhexyl alcohol residues.

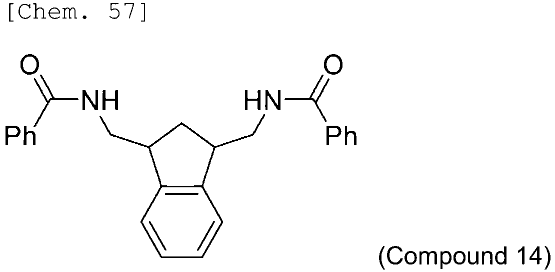

### <Polymerization>

Polymerization of propylene was performed in the same manner as Example 1, except that the solid titanium catalyst component [α14] was used in place of the solid titanium catalyst component [α1]. The results are shown in Table 3.

### [Example 15]

### <Preparation of solid titanium catalyst component [α15]>

A solid titanium catalyst component [α15] was obtained in the same manner as Example 1, except that 2.17 g of the following compound 15 was used in place of 1.77 g of the compound 1. The composition of the solid titanium catalyst component [α15] thus obtained had 0.29 mass% titanium, 1.4 mass% magnesium, and 0.02 mass% 2-ethylhexyl alcohol residues.

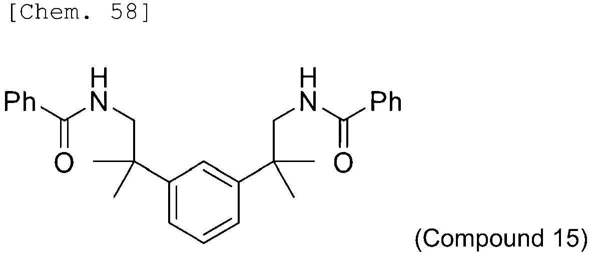

### <Polymerization>

Polymerization of propylene was performed in the same manner as Example 1, except that the solid titanium catalyst component [α15] was used in place of the solid titanium catalyst component [α1]. The results are shown in Table 3.

### [Example 16]

### <Preparation of solid titanium catalyst component [α16]>

A solid titanium catalyst component [α16] was obtained in the same manner as Example 1, except that 2.43 g of the following compound 16 was used in place of 1.77 g of the compound 1. The composition of the solid titanium catalyst component [α16] thus obtained had 0.28 mass% titanium, 1.3 mass% magnesium, and 0.03 mass% 2-ethylhexyl alcohol residues.

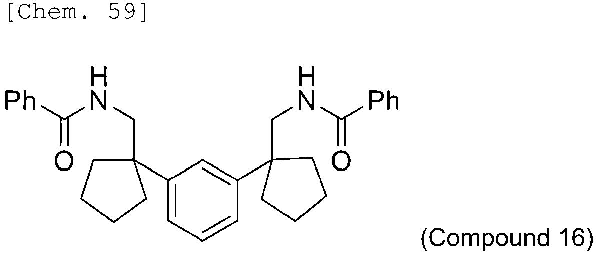

### <Polymerization>

Polymerization of propylene was performed in the same manner as Example 1, except that the solid titanium catalyst component [α16] was used in place of the solid titanium catalyst component [α1]. The results are shown in Table 3.

### [Table 3]

**Table 3**

| Example | Activity (kg-PP/g-cat.) | Bulk specific gravity (g/mL) | MFR (g/10 min) | Amount of decane-insoluble parts (wt%) | Mw | Mw/Mn |
|---|---|---|---|---|---|---|
| Example 9 | 10.8 | 0.43 | 20.5 | 9.1 | 265,000 | 8.2 |
| Example 10 | 16.3 | 0.46 | 13.2 | 8.3 | 286,000 | 7.6 |
| Example 11 | 15.7 | 0.44 | 10.8 | 7.1 | 307,000 | 7.7 |
| Example 12 | 16.9 | 0.47 | 14.8 | 8.4 | 275,000 | 7.5 |
| Example 13 | 8.3 | 0.37 | 19.9 | 8.7 | 252,000 | 6.9 |
| Example 14 | 8.0 | 0.40 | 14.3 | 8.4 | 354,000 | 9.8 |
| Example 15 | 15.6 | 0.41 | 15.0 | 7.7 | 267,000 | 8.7 |
| Example 16 | 15.1 | 0.48 | 13.2 | 7.7 | 294,000 | 7.4 |

**Table 3 (continued)**

| Example | Mz/Mw | Mw/Mn + Mz/Mw | Tm (°C) | Tc (°C) | ΔH (J/g) |
|---|---|---|---|---|---|
| Example 9 | 7.7 | 15.9 | 163.1/157.6 | 114.3 | 91.6 |
| Example 10 | 7.3 | 14.9 | 162.8/157.6 | 113.3 | 89.3 |
| Example 11 | 6.5 | 14.2 | 158.3/144.5 | 113.6 | 93.2 |
| Example 12 | 6.4 | 13.9 | 163.2/157.4 | 112.4 | 90.9 |
| Example 13 | 6.7 | 13.6 | 163.3/157.2 | 113.1 | 85.4 |
| Example 14 | 12.9 | 22.7 | 170.0/157.1 | 112.6 | 90.9 |
| Example 15 | 5.8 | 14.5 | 163.8/158.6 | 113.6 | 91.5 |
| Example 16 | 8.3 | 15.7 | 163.6/157.8 | 112.5 | 94.3 |

### [Example 17]

### <Preparation of solid titanium catalyst component [α17]>

A solid titanium catalyst component [α17] was obtained in the same manner as Example 1, except that 1.57 g of the following compound 17 was used in place of 1.77 g of the compound 1. The composition of the solid titanium catalyst component [α17] thus obtained had 0.95 mass% titanium, 1.0 mass% magnesium, and 0.03 mass% 2-ethylhexyl alcohol residues.

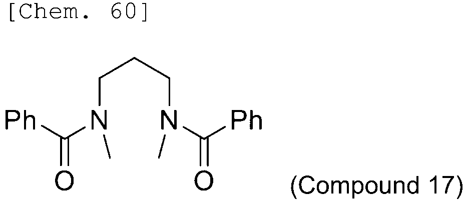

### [Example 18]

### <Preparation of solid titanium catalyst component [α18]>

A solid titanium catalyst component [α18] was obtained in the same manner as Example 1, except that 1.50 g of the following compound 18 was used in place of 1.77 g of the compound 1. The composition of the solid titanium catalyst component [α18] thus obtained had 0.85 mass% titanium, 1.1 mass% magnesium, and 0.04 mass% 2-ethylhexyl alcohol residues.

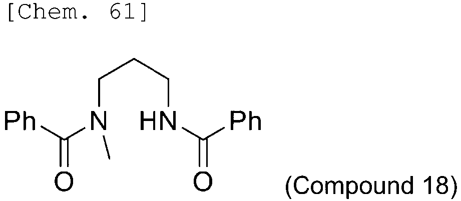

### [Example 19]

### <Preparation of solid titanium catalyst component [α19]>

A solid titanium catalyst component [α19] was obtained in the same manner as Example 1, except that 0.98 g of the following compound 19 was used in place of 1.77 g of the compound 1. The composition of the solid titanium catalyst component [α19] thus obtained had 0.57 mass% titanium, 1.2 mass% magnesium, and 0.16 mass% 2-ethylhexyl alcohol residues.

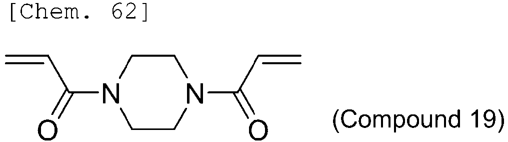

### [Example 20]

### <Preparation of solid titanium catalyst component [α20]>

A solid titanium catalyst component [α20] was obtained in the same manner as Example 1, except that 1.77 g of the following compound 20 was used in place of 1.77 g of the compound 1. The composition of the solid titanium catalyst component [α20] thus obtained had 0.80 mass% titanium, 1.0 mass% magnesium, and 0.14 mass% 2-ethylhexyl alcohol residues.

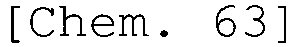

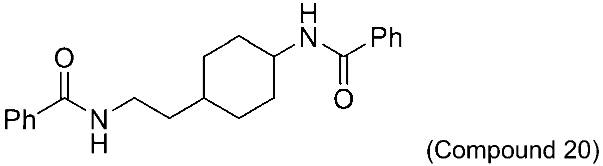

### [Example 21]

### <Preparation of solid titanium catalyst component [α21]>

A solid titanium catalyst component [α21] was obtained in the same manner as Example 1, except that 1.49 g of the following compound 21 was used in place of 1.77 g of the compound 1. The composition of the solid titanium catalyst component [α21] thus obtained had 0.71 mass% titanium, 1.2 mass% magnesium, and 0.18 mass% 2-ethylhexyl alcohol residues.

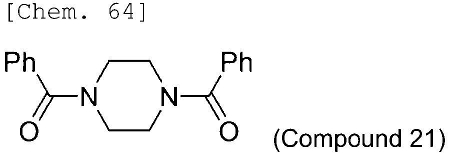

### [Example 22]

### <Preparation of solid titanium catalyst component [α22]>

A solid titanium catalyst component [α22] was obtained in the same manner as Example 1, except that 1.20 g of the following compound 22 was used in place of 1.77 g of the compound 1. The composition of the solid titanium catalyst component [α22] thus obtained had 0.38 mass% titanium, 1.6 mass% magnesium, and 0.07 mass% 2-ethylhexyl alcohol residues.

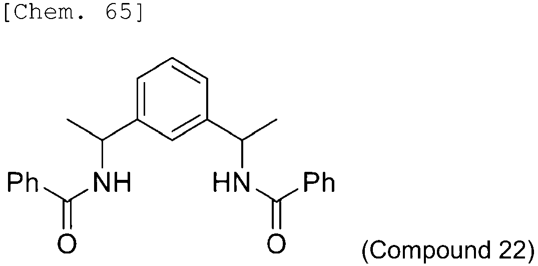

### [Example 23]

### <Preparation of solid titanium catalyst component [α23]>

A solid titanium catalyst component [α23] was obtained in the same manner as Example 1, except that 1.64 g of the following compound 23 was used in place of 1.77 g of the compound 1. The composition of the solid titanium catalyst component [α23] thus obtained had 0.47 mass% titanium, 1.2 mass% magnesium, and 0.02 mass% 2-ethylhexyl alcohol residues.

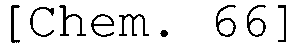

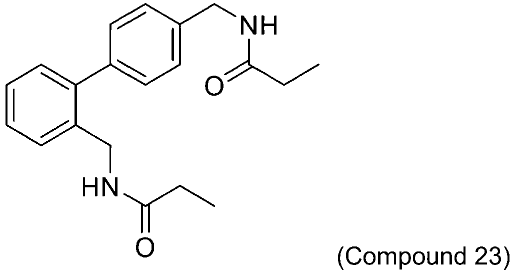

### [Example 24]

### <Preparation of solid titanium catalyst component [α24]>

A solid titanium catalyst component [α24] was obtained in the same manner as Example 1, except that 1.68 g of the following compound 24 was used in place of 1.77 g of the compound 1. The composition of the solid titanium catalyst component [α24] thus obtained had 0.57 mass% titanium, 1.3 mass% magnesium, and 0.02 mass% 2-ethylhexyl alcohol residues.

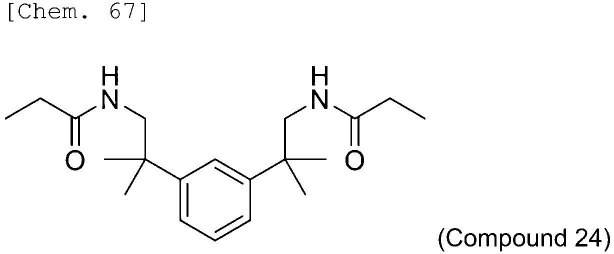

### [Example 25]

### <Preparation of solid titanium catalyst component [α25]>

A solid titanium catalyst component [α25] was obtained in the same manner as Example 1, except that 1.94 g of the following compound 25 was used in place of 1.77 g of the compound 1. The composition of the solid titanium catalyst component [α25] thus obtained had 0.47 mass% titanium, 1.3 mass% magnesium, and 0.02 mass% 2-ethylhexyl alcohol residues.

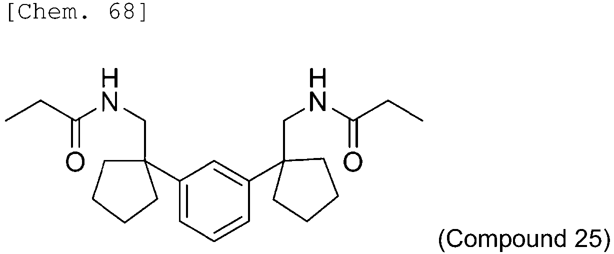

### [Example 26]

### <Preparation of solid titanium catalyst component [α26]>

A solid titanium catalyst component [α26] was obtained in the same manner as Example 2, except that 2.43 g of the following compound 26 was used in place of 0.63 g of the compound 1. The composition of the solid titanium catalyst component [α26] thus obtained had 0.55 mass% titanium, 1.5 mass% magnesium, and 0.04 mass% 2-ethylhexyl alcohol residues.

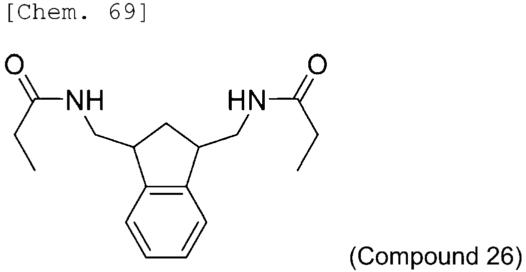

## Claims

1. A solid titanium catalyst component, comprising magnesium, titanium, halogen, and an amide compound specified by the following formula (1): 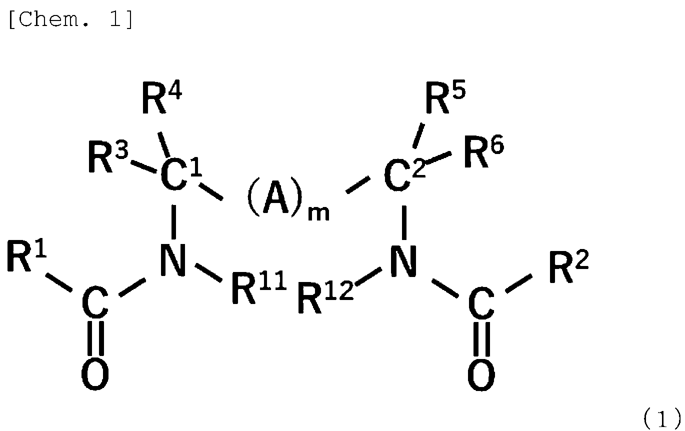 wherein
C, C¹, and C² are carbon atoms;
N is a nitrogen atom;
R¹ and R² are each a hydrocarbon group;
R³ to R⁶ are each a group containing an element selected from carbon, hydrogen, and elements in Groups 15, 16, and 17 of the periodic table;
R¹¹ and R¹² are each a hydrogen atom or a hydrocarbon group;
m is an integer of 0 to 10; and
A is a linking group selected from an aliphatic group, an alicyclic group, and an aromatic group, and a plurality of A, when present, are all groups with the same structure, or are groups with structures that partially or wholly differ from each other.

2. The solid titanium catalyst component according to claim 1, wherein the amide compound is specified by the following formula (2): 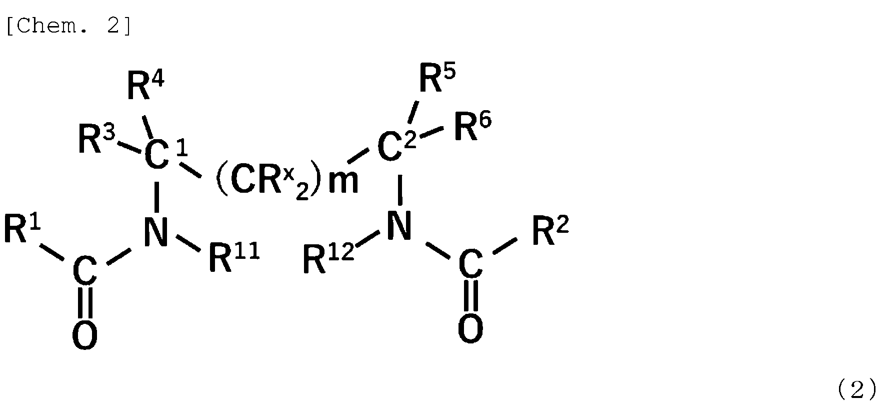 wherein R¹ to R⁶, R¹¹, R¹², C, C¹, C², and N are as defined for the formula (1); m is an integer of 1 to 10; a plurality of R^{x} are groups containing an element selected from carbon, hydrogen, and elements in Groups 15, 16, and 17 of the periodic table; and R^{x} are optionally bonded to each other to form a ring structure.

3. The solid titanium catalyst component according to claim 1, wherein R¹¹ and R¹² are hydrogen atoms.

4. The solid titanium catalyst component according to claim 1, wherein R³, R⁴, R⁵, and R⁶ are hydrogen atoms.

5. A catalyst for olefin polymerization, comprising the solid titanium catalyst component (I) according to claim 1 and an organometallic compound catalyst component (II) containing a metal element selected from Groups 1, 2, and 13 of the periodic table.

6. The catalyst for olefin polymerization according to claim 5, further comprising an electron donor (III).

7. An olefin polymerization method, comprising polymerizing an olefin in the presence of the catalyst for olefin polymerization according to claim 5 or 6.
